# EUROPEAN PATENT SPECIFICATION

(11) **EP 2 761 527 B1**
(45) Date of publication and mention of the grant of the patent: **06.02.2019**
(21) Application number: 12773176.8
(22) Date of filing: 27.09.2012
(51) Int. Cl.: G06F 21/30

(54) **MOBILE APPLICATION, SINGLE SIGN-ON MANAGEMENT**
MOBILE ANWENDUNG MIT EINZELANMELDUNGSVERWALTUNG
APPLICATION MOBILE, GESTION DE SIGNATURE UNIQUE

(30) Priority: 29.09.2011 US 201161541034 P
(43) Date of publication of application: 06.08.2014
(73) Proprietor: Oracle International Corporation, Redwood Shores, CA 94065 (US)
(72) Inventor: SONDHI, Ajay, San Jose California 95136 (US); DONLEY, Clayton, Loas Altos California 94022 (US); BHAT, Shivaram, Sunnyvale California 94087 (US); WONG, Wai William, Santa Clara California 95051 (US); YIU, Alex, San Jose California 95134 (US)
(74) Representative: Gill Jennings & Every LLP
(86) International application number: PCT/US2012/057622
(87) International publication number: WO 2013/049392

(56) References cited:
- WO-A2-01/72009
- US-A1- 2007 006 299
- US-A1- 2009 113 527
- US-A1- 2009 292 927
- US-A1- 2011 041 171

## Description

### FIELD OF INVENTION

The present invention is generally related to mobile applications, and more particularly, to single sign-on management.

### BACKGROUND

Mobile devices are often configured with multiple different applications, including web browsers, native mobile applications, and the like. In general, each application may request individual authentication credentials from users of the mobile devices. Additionally, each application may individually authenticate itself with a server prior to being given access to an account of the server. However, logging in multiple times from the same device, in order to utilize more than one of the multiple different applications may be tedious, time consuming, unpleasant, and insecure. Additionally, multiple log-in requests may make users less alert and less aware of which applications are regularly requesting credentials. As such, access to such

applications and associated web services may pose a security risk if not addressed appropriately. For example, in some instances, multiple log-in requests may make password phishing techniques more likely to succeed. Further, data security, especially with the ubiquitous use of mobile devices and associated applications and/or web services, continues to be an ongoing concern. As such, finding technical solutions in this area, and in particular technical solutions for implementing secure single sign-on for mobile applications continues to be a priority. US2009/292927 A1 describes single sign on with dynamic authentication levels.

WO 01/72009A2 describes a single sign on method and system for accessing a plurality of services distributed over a network.

### BRIEF SUMMARY

According to a first aspect of the invention, there is provided a computer-readable memory as set out in claim 1.

According to a second aspect of the invention, there is a computer-implemented method as set out in claim 7.

According to a third aspect of the invention, there is a program as set out in claim 11.

According to a fourth aspect of the invention, there is a system as set out in claim 12.

Techniques for managing single sign-on are provided. In some examples, single sign-on functionality may be provided for use on mobile devices by utilizing mobile applications, cloud applications, and/or other web-based applications. For example, a mobile application or mobile web browser may request to authenticate with or access one or more service providers. Authentication credentials may be requested from a user of the mobile device to facilitate such authentication and/or access. Based at least in part on a successful log-in, access to server resources from other applications on the same mobile device may be provided without successive or repetitive credential requests to the user.

According to at least one example, a computer readable memory may store instructions that, when executed by one or more processors, cause the one or more processors to receive one or more requests to access a service provider. In some examples, the requests may be received from a first application of the mobile device. Additionally, the instructions may also cause the one or more processors to log in a user associated with the first application. The instructions may further cause the one or more processors to provide a token for accessing the service provider to the first application. A second token may then be provided to a second application.

In some examples, the first application may be configured as an application agent for providing single sign-on functionality for the second application. Additionally, in some
examples, the second application may be configured as a web browser application or a native application.

In one example, the first application may be configured as a browser application associated with a web service while the second application may be configured as a native application associated with an application service provider. The browser application and the native application may be executed or otherwise hosted by a mobile device.

In some examples, the first application may be configured as a native application of a mobile device. The native application may be associated with an application service provider. Additionally, the second application may be configured as a browser application associated with a web application. The browser application may be executed or otherwise hosted by a mobile device. Further, in some examples, the second application may be configured as a second native application associated with a second application service. The second native application may also be executed or otherwise hosted by the mobile device.

In one example, a log-in of the user may include an authentication of the user with an authentication service that utilizes a representational state transfer (REST) call. In another example, a second token provided to a second application may enable the second application to log in to an application service provider associated with the second application without the user providing log-in credentials to the application service provider associated with the second application.

Some or all of the examples described above may achieve improvements in the ease of use of various authenticated services. Additionally, the above examples may also improve the security of user interactions therewith and, as such, may improve data security of the users, the mobile devices, and/or the mobile applications and associated web services. The foregoing technical effects, along with additional technical effects described below, solve the ongoing issues of data security and user authentication, particularly with respect to mobile devices and their associated applications.

Techniques for managing identities are also provided. In some examples, identity management, authentication, authorization, and token exchange frameworks may be provided for use with mobile devices, mobile applications, cloud applications, and/or other web-based applications. For example a mobile client may request to perform one or more identity management operations associated with an account of a service provider. Based at least in part on the requested operation and/or the particular service provider, an application programming interface (API) may be utilized to generate and/or perform one or more instructions and/or method calls for managing identity information of the service provider.

According to at least one example, a system may receive a request to perform a function associated with a service provider. The request may be received from a client application and may be formatted as a representational state transfer (REST) call. Additionally, the system may also determine an access management service call corresponding to the service provider for which performance of the function is being requested. Further, the system may perform the access management service call.

In one example, the client application from which the request is received may be implemented as a mobile application of a mobile device, a software as a service (SaaS) application, and/or a Rich Internet Application (RIA). Additionally, in some examples, the request to perform the function associated with the service provider may include an authorization request. The authentication request may include a user identifier (ID) of a user of the client application. The authentication request may also include a password of the user and/or a client token used to indicate that the client application has been authenticated. The user ID and the password may, in some cases, be used to authenticate the user with the access management service.

In one example, the access management service call performed by the system may include a method call to implement a token exchange.

Additionally, in some examples, the request to perform the function associated with the service provider may include an access request. The access request may, in some cases, include a client token indicating that the client is authenticated, a user token indicating that the user is authenticated, and/or an indication of the service provider for which access is being requested. In some cases, the system may receive an indication that the user and/or the client application have been granted access to the service provider by the access management service. In this case, the system may then provide an access token to the client application.

In one example, service calls for a first access management service may be different from service calls for a second access management service. Further, in some cases, the access management service to be utilized may be specified by the service provider, but not indicated to the client application. In this way, the client application can make REST calls independent of the API or other configuration of the service provider.

According to at least one example, a system may receive an instruction to manage an identity. The system may also be configured to model an identity relationship, associated with the identity that is to be managed, as a uniform resource identifier (URI). The system may also map the URI to a schema associated with a service provider and/or transmit the schema to the service provider for managing the identity as requested.

In some examples, the received instruction to manage an identity may be received by a mobile client application, an RIA, or a SaaS application. The received instruction may also be formatted as a REST call. Additionally, in some aspects, the modeled identity relationship may include the identity to be managed and/or an association between the identity and another entity. Further, the identity relationship may be modeled as a URI based at least in part on a string of characters including the identity and the association.

Techniques for a resource management advice service are also provided. In some examples, resource management advice and/or instructions may be provided for use with mobile devices, mobile applications, cloud applications, and/or other web-based applications. For example, a mobile client may request to perform one or more resource management operations associated with a service provider. Based at least in part on the requested operation and/or the particular service provider, advice and/or instructions for managing the resource may be provided.

According to at least one example, a computer readable memory may store instructions that, when executed by one or more processors, cause the one or more processors to receive a request to manage a secure resource of a service provider. The request may be received from a client application and may be formatted as a representational state transfer (REST) call. Additionally, the instructions may also cause the one or more processors to determine an acquisition path for performing the management of the secure resource. The instructions may further cause the one or more processors to generate an instruction set for following the acquisition path. The instruction set may include at least one instruction. Further, the instructions may cause the one or more processors to transmit the instruction set to the client application.

In one example, the client application from which the request is received may be implemented as a mobile application of a mobile device, a software as a service (SaaS) application, and/or a Rich Internet Application (RIA). Additionally, in some examples, the request to manage the secure resource may include a request to access the secure resource, a request to update the secure resource, or a request to delete the secure resource. The secure resource may include profile information associated with a user of the client application, payroll information associated with a user of the client application, or social information associated with a user of the client application. The generated instruction may, in some cases, be protected by a security filter. In some aspects, the acquisition path may be determined dynamically based at least in part on the secure resource and/or a change associated with the secure resource.

In one example, the instructions may cause the one or more processors to receive, based at least in part on the transmitted instruction set, an authentication request from the client application. The instructions may also cause the one or more processors to provide, based at least in part on the authentication request, an authentication token to the client application.

Additionally, in some examples, the instructions may cause the one or more processors to determine a second acquisition path for performing the management of the secure resource, generate a second instruction set, and transmit the second instruction set to the client.

The foregoing, together with other features and embodiments, will become more apparent upon referring to the following specification, claims, and accompanying drawings.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items.
Figure 1 is a simplified block diagram illustrating an example architecture for managing single sign-on for mobile devices that includes one or more REST service computers, one or more user devices, and one or more application provider computers connected via one or more networks, according to at least one example.
Figure 2 is a simplified block diagram illustrating at least some features of the single sign-on management described herein, according to at least one example.
Figure 3 is a simplified block diagram illustrating at least some additional features of the single sign-on management described herein, according to at least one example.
Figures 4-7 are simplified process flow diagrams illustrating at least some features of the single sign-on management described herein, according to at least a few examples.
Figures 8-10 are simplified flow diagrams illustrating example processes for implementing at least some features of the single sign-on management described herein, according to at least a few examples.
Figure 11 is a simplified block diagram illustrating components of a system environment that may be used in accordance with an embodiment of the single sign-on management described herein, according to at least one example.
Figure 12 is a simplified block diagram illustrating a computer system that may be used in accordance with embodiments of the single sign-on management described herein, according to at least one example.
Figure 13 is a simplified block diagram illustrating a single sign-on management apparatus, according to at least one example.
Figure 14 is a simplified block diagram illustrating a single sign-on management apparatus, according to at least one other example.
Figure 15 is a simplified block diagram illustrating a single sign-on management apparatus, according to at least one other example.

### DETAILED DESCRIPTION

### Overview

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

Embodiments of the present disclosure are directed to, among other things, providing single sign-on management to one or more entities (e.g., mobile applications) via a computing resource and/or identity interface service computing system. As used herein, an identity interface service may include one or more computing systems for managing single sign-on and/or authentication requests, client tokens, application tokens, user tokens, or the like. Additionally, the identity interface service may be configured to provide a pluggable interface layer between client applications and other service providers. For example an identity interface service may receive identity management instructions from client applications (e.g., mobile applications of mobile devices, SaaS applications, RIAs, combinations of the foregoing, or the like) and provide appropriately translated instructions to one or more service providers, identity providers, and/or access management providers. In some examples, mobile applications may include, but are not limited to, native applications (e.g., mobile device applications configured to execute on specific mobile devices, in some instances, without interpretation by other software), web browser applications (e.g., for displaying web pages to users of the mobile device), security agent applications, helper applications, and/or authentication delegation applications.

In some aspects, the identity interface service may provide the ability for mobile applications of a mobile device to perform log-in operations (e.g., authentication, authorization, etc.) on behalf of other mobile applications of the mobile device. In this way, a user may provide log-in information to one of the mobile applications a single time. The mobile application may then log in the user and provide access tokens or other access functionality to other mobile applications associated with the log-in, the user, the mobile device, or other group or sub-group of applications and/or services. In some examples, the log-in operations and/or requests may be provided to the identity interface service in REST style. Further, in some examples, the mobile application making the log-in operation requests may be a native mobile application, a browser application, and/or a security agent application. For example, a security agent application may be a helper application, an authentication delegation application, or other application designated to help or otherwise facilitate the single sign-on described herein. That is, a security agent application may be configured to act as a single sign-on application for native applications, groups of native applications, browser applications, other groups of native and/or browser applications, sub-groups of mobile applications (native and/or browser), or the like. Alternatively, or in addition, a browser application or a native application may be designated and configured to act as the security agent application for other mobile applications, groups of mobile applications, etc.

Additionally, in some aspects, the identity service may provide authentication, authorization, auditing, token services, user profile management, password management, and/or ID management. Additionally, these services may be exposed or otherwise provided to the mobile applications that may not natively be able to interact with such services (e.g., services deployed by or within an enterprise solution). In one example, the identity interface service may provide a REST interface to the mobile applications to allow the communication of identity management requests to an identity service. In this way, the mobile applications may utilize native Internet-based operations such as those utilizing, but not limited to, the JavaScript Object Notation (JSON) data format, the hypertext transfer protocol (HTTP), and/or the hypertext markup language (HTML). Further, the identity interface service may allow plug-in capabilities for service providers including, but not limited to, enterprise solutions, identity services, access management services, and/or other identity-related solutions. For example, an identity service of an enterprise solution may plug in to the identity interface service to allow for secure interaction with a client application from which it would not ordinarily be able to receive instructions and/or requests. RESTful APIs may be provided for such service providers and, in some examples, security models may be provided for securing the RESTful APIs.

A security agent application of a mobile device receives one more log-in requests from a mobile application of the mobile device. The requests may be received in any format, may include user log-in information, and may identify one or more service providers, application providers, or other computing devices associated with the mobile applications. The security agent application transmits one or more log-in requests, authentication requests, authorization requests, or the like to the identity interface service. These requests may be sent to the identity interface service in REST style. Client tokens, user tokens, and/or access tokens may then be received, by the security agent application, from the identity interface service. These tokens may be for providing access to the requested service providers, application providers, or other servers. The security agent application determines which mobile applications are within a security group, a circle of trust, or other single sign-on group (hereinafter, referred to as a circle of trust) and share received user tokens therewith. Additionally, the security agent application requests specific access tokens for each mobile application within the group. In this way, when the user attempts to use different mobile applications within the same circle of trust, user information does not need to be requested again. Further, mobile applications of a mobile device may be given a priority or other level to indicate that, when present, the highest priorities mobile applications may act as the security agent application. In this way, the single sign-on management described herein need not rely on a dedicated security agent application. Rather, any browser application or native application of the mobile device may perform the single sign-on operations for other mobile application of a circle of trust.

In other non-limiting examples, the identity interface service may be configured to receive log-in requests (sometimes, as REST calls) from a dedicated security agent application, a browser application acting as a security agent application, and/or a native application acting as a security agent application. The identity interface service may then respond to the requesting application with user tokens, client tokens, and/or access tokens that may be shared with other applications of the mobile device. For example, the identity interface service may receive one or more identity propagation and/or token exchange requests from a mobile application attempting to access a service provider. The request may be received in REST style (i.e., as a REST call) and may indicate that the client application, the user, or the mobile device has been authenticated or is requesting to be authenticated. The identity interface service may determine, based at least in part on the service provider (e.g., an access management service of an enterprise solution), an appropriate identity propagation and/or token exchange instruction to be performed. The identity interface service may then perform the instruction in order to provide appropriate tokens (e.g., an access token, a user token, or a client token) to the mobile application. Alternatively, or in addition, the identity interface service may format the instruction, based at least in part on an API of the service provider, in such a way that the service provider may be able to perform the instruction. The identity interface service may then transmit the formatted instruction or instructions to the service provider. The service provider may then perform the instructions and, in some cases, provide the appropriate access token to the identity interface service. In this way, the mobile application may be provided with appropriate access tokens for accessing the service provider (e.g., assuming the mobile application and the user are granted access) even without directly communicating with the service provider, and/or without knowledge of particular and/or proprietary APIs of the service provider. While this example describes single sign-on, identity propagation (i.e., replicating authenticated identities through multiple systems), and/or token exchange (i.e., providing access tokens based on prior authentication), the identity interface service may be configured, as described above, for implementing other services as well, including, but not limited to, authentication, authorization, auditing, profile management, password management, ID management, etc.

This brief introduction, including section titles and corresponding summaries, is provided for the reader's convenience and is not intended to limit the scope of the claims, nor the preceding sections. Furthermore, the techniques described above and below may be implemented in a number of ways and in a number of contexts. Several example implementations and contexts are provided with reference to the following figures, as described below in more detail. However, the following implementations and contexts are but a few of many.

### Illustrative Architecture

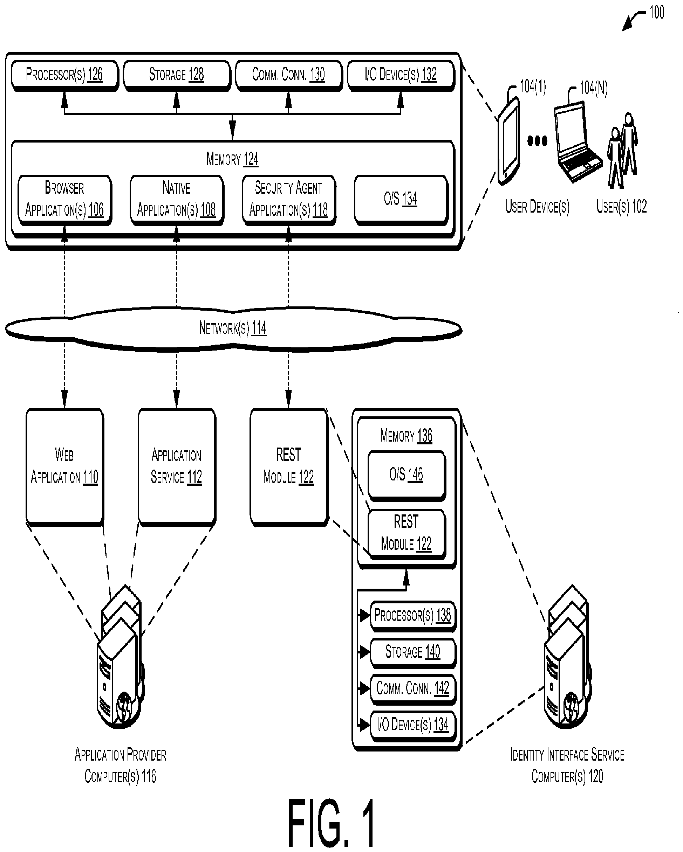

Figure 1 depicts a simplified example system or architecture 100 in which techniques for managing single sign-on for mobile applications may be implemented. In architecture 100, one or more users 102 (i.e., account holders) may utilize user computing devices 104(1)-(N) (collectively, user devices 104) to access one or more browser applications 106 or native applications 108 in communication with one or more web applications 110 and/or application services 112, respectively, via one or more networks 114. In some aspects, the web application 110 and/or application service may be hosted, managed, and/or provided by a computing resources service or service provider, such as by utilizing one or more application provider computers 116. The one or more application provider computers 116 may, in some examples, provide computing resources and/or services such as, but not limited, web services, data storage, email, identity management, authorization and/or authentication services, or the like. The one or more application provider computers 116 may also be operable to provide web hosting, application development platforms, implementation platforms, or the like to the one or more users 102.

In some examples, the browser application 106 may be any type of web browser configured to retrieve, present, and/or traverse web content on behalf of or for the user 102 via the user device 104. In some cases, the browser applications 106 may access the web application 110 or other web page via the networks 114. The native applications 108 may, in some examples, be any type of mobile application designed and/or configured to be executed by the user device 104 including, but not limited to, tax applications, directory applications, expense report applications, log-in applications, library applications, customer relationship management (CRM) software, or the like. Further, in some cases, the native applications 108 may access data and/or other resources stored and/or provided by the application services 112 via the networks 114. For example, a native application may be configured as a directory application that access a directory service or server of an application provider computer 114 for directory information and/or any data not stored locally at the user device 104.

The users 102 may also access one or more security agent applications 118 in communication with an identity service or other service provider that may be executed or otherwise hosted by the identity interface service computers 120, via the networks 114. In some examples, a security agent application 118 may be a helper application, authentication delegation application, a single sign-on (SSO) mobile application, a security agent, an application agent, or the like (hereinafter, "security agent application"). The security agent application 118 may be configured to perform single sign-on functionality and/or operations on behalf of other mobile applications (e.g., browser applications 106 and/or native applications 108) of user devices 104 or on behalf of users 102 of the user devices 104. Further, in some examples, the security agent application 118 may transmit and/or receive log-in credentials, security information, tokens, etc., to and/or from a REST module 122 of the identity interface service computers 120, for performing the single sign-on functionality described herein. Alternatively, the security agent application 118 may communicate with one or more other modules of the identity interface service computers 120 and/or of other computing devices that may facilitate single sign-on operations for mobile devices.

In some examples, the networks 114 may include any one or a combination of multiple different types of networks, such as cable networks, the Internet, wireless networks, cellular networks, intranet systems, and/or other private and/or public networks. While the illustrated example represents the users 102 accessing the web application 110, the application service 112, and/or the REST module 122 over the networks 114, the described techniques may equally apply in instances where the users 102 interact with one or more service provider computers via the one or more user devices 104 over a landline phone, via a kiosk, or in any other manner. It is also noted that the described techniques may apply in other client/server arrangements (e.g., set-top boxes, etc.), as well as in non-client/server arrangements (e.g., locally stored applications, etc.).

The browser applications 106 and/or the native applications 108 may allow the users 102 to interact with the application provider computers 116, such as to store, access, and/or manage data, develop and/or deploy computer applications, and/or host web content. The user devices 104 may be any type of computing device such as, but not limited to, a mobile phone, a smart phone, a personal digital assistant (PDA), a laptop computer, a desktop computer, a thin-client device, a tablet PC, etc. In some examples, the user devices 104 may be in communication with the application provider computers 116 and/or the identity interface service computers 120 via the networks 114, or via other network connections. Further, the user devices 104 may also be configured to implement one or more mobile applications, RIAs, or SaaS applications. In some examples, however, these mobile applications may not be programmed with, or otherwise aware of, instructions for interacting with the application provider computers 116 to log in or otherwise access the web applications 110 and/or application services 112. However, in some cases, the mobile applications (e.g., the security agent application 118, the browser applications 106, and/or the native applications 108) may be able to communicate or otherwise interact with the identity interface service computers 120. In this way, the identity interface service computers 120 may act as an interface layer between the mobile applications and the application provider computers 116. Additionally, the identity interface service computers 120 may provide the appropriate instructions and/or code to the security agent application 118 for communicating with or otherwise providing log in functionality and/or access to the web applications 110 and/or the application services 112.

In one illustrative configuration, the user devices 104 may include at least one memory 124 and one or more processing units (or processor(s)) 126. The processor(s) 126 may be implemented as appropriate in hardware, computer-executable instructions, firmware, or combinations thereof. Computer-executable instructions or firmware implementations of the processor(s) 126 may include computer-executable or machine-executable instructions written in any suitable programming language to perform the various functions described.

The memory 124 may store program instructions that are loadable and executable on the processor(s) 126, as well as data generated during the execution of these programs. Depending on the configuration and type of user device 104, the memory 124 may be volatile (such as random access memory (RAM)) and/or non-volatile (such as read-only memory (ROM), flash memory, etc.). The user device 104 may also include additional storage (e.g., removable and/or non-removable storage) 128 including, but not limited to, magnetic storage, optical disks, and/or tape storage. The disk drives and their associated computer-readable media may provide non-volatile storage of computer-readable instructions, data structures, program modules, and other data for the computing devices. In some implementations, the memory 114 may include multiple different types of memory, such as static random access memory (SRAM), dynamic random access memory (DRAM), or ROM.

The memory 124, the additional storage 128, both removable and non-removable, are all examples of computer-readable storage media. For example, computer-readable storage media may include volatile or non-volatile, removable or non-removable media implemented in any method or technology for storage of information such as computer-readable instructions, data structures, program modules, or other data. The memory 124 and the additional storage 128 are all examples of computer storage media.

The user devices 104 may also contain communications connection(s) 130 that allow the user devices 104 to communicate with a stored database, another computing device or server (e.g., the application provider computers 116, the identity interface service computers 120, etc.), user terminals, and/or other devices on the networks 114. The user devices 104 may also include input/output (I/O) device(s) 132, such as a keyboard, a mouse, a pen, a voice input device, a touch input device, a display, speakers, a printer, etc.

Turning to the contents of the memory 124 in more detail, the memory 124 may include an operating system 134 and one or more application programs or services for implementing the features disclosed herein including at least the browser applications 106, native applications 108 (e.g., a tax application, a directory application, a CRM application, etc.), and/or the security agent application 118. As noted above, in some examples the security agent application 118 may be a stand-alone application for facilitating single sign-on for the other mobile applications. However, in some examples, the browser application 106, or a native application 108, may be configured to act as the security agent application for a group of mobile applications (e.g., based on a priority, a predetermined list of applications, or the like). Additionally, the memory 124 may store access credentials and/or other user information such as, but not limited to, user IDs, passwords, other user information, and/or log-in requests to be sent to the identity interface service computers 120. In some examples, the other client information may include information for authenticating an account access request such as, but not limited to, a device ID, a cookie, an IP address, a location, or the like. In addition, the other client information may include a user 102 provided response to a security question or a geographic location obtained by the user device 104.

In some aspects, the identity interface service computers 120 may also be any type of computing devices such as, but not limited to, mobile, desktop, thin-client, and/or cloud computing devices, such as servers. In some examples, the identity interface service computers 120 may be in communication with the user devices 104 via the networks 114, or via other network connections. The identity interface service computers 120 may include one or more servers, perhaps arranged in a cluster, as a server farm, or as individual servers not associated with one another. These servers may be configured to perform or otherwise host features described herein including, but not limited to, the single sign-on service and/or the identity interface service. Additionally, in some aspects, the identity interface service computers 120 may be configured as part of an integrated, distributed computing environment.

In one illustrative configuration, the identity interface service computers 120 may include at least one memory 136 and one or more processing units (or processor(s)) 138. The processor(s) 138 may be implemented as appropriate in hardware, computer-executable instructions, firmware, or combinations thereof. Computer-executable instruction or firmware implementations of the processor(s) 138 may include computer-executable or machine-executable instructions written in any suitable programming language to perform the various functions described.

The memory 136 may store program instructions that are loadable and executable on the processor(s) 138, as well as data generated during the execution of these programs. Depending on the configuration and type of identity interface service computers 120, the memory 136 may be volatile (such as random access memory (RAM)) and/or non-volatile (such as read-only memory (ROM), flash memory, etc.). The identity interface service computers 120 or servers may also include additional storage 140, which may include removable storage and/or non-removable storage. The additional storage 140 may include, but is not limited to, magnetic storage, optical disks, and/or tape storage. The disk drives and their associated computer-readable media may provide non-volatile storage of computer-readable instructions, data structures, program modules, and other data for the computing devices. In some implementations, the memory 136 may include multiple different types of memory, such as static random access memory (SRAM), dynamic random access memory (DRAM), or ROM.

The memory 136, the additional storage 140, both removable and non-removable, are all examples of computer-readable storage media. For example, computer-readable storage media may include volatile or non-volatile, removable or non-removable media implemented in any method or technology for storage of information such as computer-readable instructions, data structures, program modules, or other data. The memory 136 and the additional storage 140 are all examples of computer storage media.

The identity interface service computers 114 may also contain communications connection(s) 142 that allow the identity interface computers 120 to communicate with a stored database, another computing device or server, user terminals, and/or other devices on the networks 114. The identity interface service computers 120 may also include input/output (I/O) device(s) 1344, such as a keyboard, a mouse, a pen, a voice input device, a touch input device, a display, speakers, a printer, etc.

Turning to the contents of the memory 136 in more detail, the memory 136 may include an operating system 146 and one or more application programs or services for implementing the features disclosed herein including a REST interface module 122. In some examples, the REST interface module 122 may be configured to provide a REST API, receive REST API calls, determine appropriate identity service and/or log-in method calls (i.e., API calls), provide the method calls, and/or perform instructions associated with the method calls. In other words, the REST interface module 122 may be utilized for interacting with the security agent application 118 of the user devices 104.

By way of example, and without limitation, a security agent application 118 of a user device 104 may transmit a REST API call for performing a particular identity management operation (e.g., a user log-in). The REST interface module 122 may receive the API call and determine an appropriate method call for the application provider computers 116. In some examples, the REST interface module 122 may be configured to provide access tokens (e.g., user tokens, client tokens, and/or access tokens) to the security agent application 118. These tokens may then be appropriately shared with other mobile applications of the user device 104 such that the user 102 may not need to log in multiple times for mobile applications within a trusted group. A few examples of the operations of the security agent application 118 and/or the identity interface service computers 120 are described in greater detail below.

Additional types of computer storage media (which may also be non-transitory) that may be present in the identity interface service computers 120 and/or user devices 104 may include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile discs (DVD) or other optical storage, magnetic cassettes, magnetic tape, magnetic disk storage or other magnetic storage devices, or any other medium which can be used to store the desired information and which can be accessed by the identity interface service computers 120 and/or user devices 104. Combinations of any of the above should also be included within the scope of computer-readable media.

Alternatively, computer-readable communication media may include computer-readable instructions, program modules, or other data transmitted within a data signal, such as a carrier wave, or other transmission. However, as used herein, computer-readable storage media does not include computer-readable communication media.

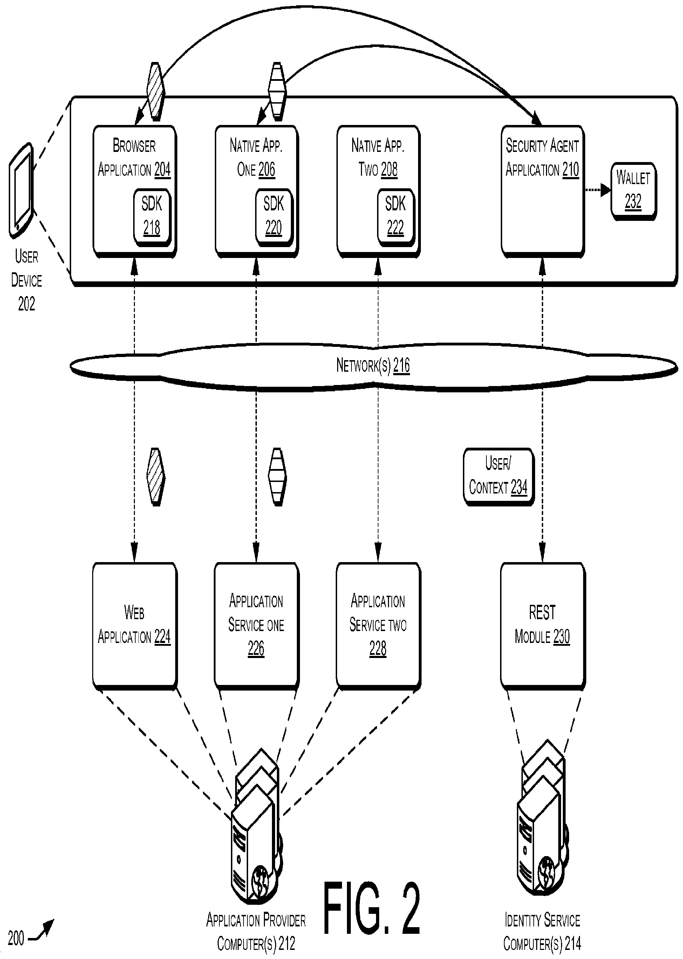

Figure 2 depicts a simplified example system or architecture 200 in which additional techniques for managing single sign-on for mobile applications may be implemented. In architecture 200, a user device 202 (e.g., a mobile device at least similar to user device 104) may be configured with a browser application 204, one or more native applications (e.g., native application one 206 and native application two 208), and a security agent application 210 for interacting with one or more service provider computers 212 and/or one or more identity service computers 214 via one or more networks 216. In some examples, each mobile application (i.e., at least the browser application 204 and/or native applications 206, 208 may include software development kit (SDK) information 218, 220, 222 for appropriately interacting with a web application 224, application service one 226, and application service two 228, respectively. Alternatively, the SDKs 218, 220, 222 may be configured to provide development information for appropriately interacting with the identity service computers 214, or more particularly, with a REST module 230 of the identity service computers 214. Further, in some examples, the security agent application 210 may be coupled with a wallet 232. The wallet 232 may be a location in memory or a separate memory device for storing user credentials and/or log-in information associated with a user of the user device 202.

As with the networks 114 of Figure 1, the networks 216 may include any one or a combination of multiple different types of networks, such as cable networks, the Internet, wireless networks, cellular networks, intranet systems, and/or other private and/or public networks. While the illustrated example represents the user device 202 accessing the web application 224, the application services 226, 228, and/or the REST module 230 over the networks 216, the described techniques may equally apply in instances where the user device 202 interacts with such applications and/or modules over a landline phone, via a kiosk, or in any other manner. It is also noted that the described techniques may apply in other client/server arrangements (e.g., set-top boxes, etc.), as well as in non-client/server arrangements (e.g., locally stored applications, etc.).

In one non-limiting example, the browser application 204 and native application one 206 may be included in a circle of trust, or other trusted group of mobile applications residing on the user device 202. In this example, native application two 208 may not be a member of the group. That is, the circle of trust may have been defined to include only the browser application 204 and native application one 206 for some particular reason. As such, single sign-on functionality may only be performed for members of the group (i.e., the circle of trust). However, in other examples, more or less mobile applications of the user device 202 may be included in the trusted group. Here, the security agent application 210 may receive a request from the browser application 204 to log in to the web application 224. In response, the security agent application 210 may request log-in credentials from a user of the user device 202 such as, but not limited to, a user name, password, etc. The security agent application 210 may then transmit user and/or context information 234 to the REST module 230 via the networks 216. This information 234 may be transmitted in REST style.

The REST module 230 may then translate the REST calls into log-in instructions for authenticating a user of the user device 202, the user device 202, and/or the browser application 204. The identity service computers 214 may perform or instruct other computing devices or modules to perform the authentication instructions. Upon authentication, the REST module 230 may provide user tokens and/or client tokens back to the security agent application 210. In some cases, the user tokens and/or client tokens may signify that the user of the user device 202 and/or the user device itself 202 have been authenticated. Similarly, the user tokens and/or client tokens may signify or otherwise indicate that the requesting application (in this case, the browser application 204) has been authenticated. Upon successfully logging in, the security application may also receive an access token for accessing the appropriate service of the application provider computers 212 (e.g., the web application 224 and/or application services 226, 228). In Figure 2, the access tokens can be identified by the striped diamond-type shapes. As such, in one example, the security agent application 210 may request an access token (e.g., the token with diagonal stripes) for the browser application 204 based at least in part on the initial request to log in to the web application 224. The security agent application 210 may then provide the access token to the browser application 204, which may then provide the access token (again, the token with diagonal stripes) to the web application 224. This access token may indicate to the web application that the browser application 204 of the user device 202 has been authenticated with the identity service computers 214. The web application 224 may then safely interact with the browser application.

Additionally, in some examples, the security agent application 210 may later receive a request from native application one 206 to access application service one 226. In this case, since native application one 206 is in the same circle of trust as the browser application 204, and since the security agent application 210 has already authenticated the user and/or the user device 202 (i.e., user and/or client tokens have already been received), the security agent application 210 may be able to request an access token (this time, the token with horizontal stripes) from the identity service computers 214 without re-requesting the user credentials of the user of the user device 202. That is, once the security agent application 210 has authenticated the user and the device 202, the security agent application 210 may be able to perform single sign-on functionality for other applications of the circle of trust. However, if the user requested to log in to application service two 228 via native application two 208 (assuming, as noted above, that native application two 208 may not be in the circle of trust), the security agent application 210 would not be able to request and/or receive an access token for that operation.

Additionally, in other examples, the user device 202 may not be configured with a dedicated security agent application 210. In this case, one or more of the mobile applications (i.e., the browser application 204 and/or native applications 206, 208) may act as the security agent application 210. That is, once a circle of trust is formed, each application of the circle of trust may be given a priority. The priority may determine or otherwise indicate which mobile application should act as the single sign-on helper (or security) application for the group. In one non-limiting example, all three mobile applications 204, 206, 208 shown in Figure 2 may be part of a circle of trust. Additionally, native application two 208 may be given the highest priority followed by the browser application 204. As such, when a user attempts to log in to one of the three mobile applications, the user device may first check whether the highest priority application (in this example, native application two 208) is installed on the user device 202. If so, native application two 208 may act as the security agent application 210 and send REST requests to the identity service computers 214 or otherwise perform authentication for the circle of trust and/or receive and share access tokens. Alternatively, if native application two 208 is not installed on the user device, the browser application 204 may act as the security agent application 210 to perform the single sign-on operations for the circle of trust. Either way, once a user has logged in to one application of the circle of trust, user credentials will not be needed for accessing other applications of the circle of trust.

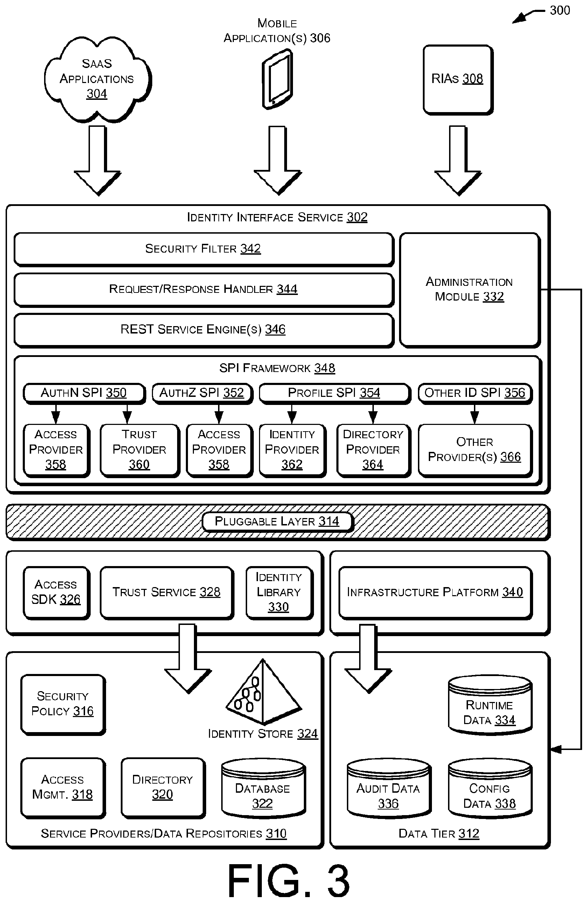

As noted, in at least one example, one or more aspects of the environment or architectures 100 and/or 200 may incorporate and/or be incorporated into a distributed program execution service such as that hosted by the identity service computers 120, 214. Figure 3 depicts a simplified architecture 300 illustrating additional aspects and/or features of the identity service computers 120, 214 of Figures 1 and 2. Further, in some examples, an identity interface service may actually implement REST service as one of its many services. For example, Figure 3 illustrates an identity interface service 302, such as that implemented by the identity service computers 120 of Figure 1 and/or the identity service computers 214 of Figure 2, receiving information, requests, and/or instructions from one or more client applications such as, but not limited to, SaaS applications 304, mobile applications 306, and/or RIAs 308. As noted above, these requests may be formatted, by the client applications 304, 306, 308, as REST calls and may be based at least in part on a REST API provided by the identity interface service 302. Additionally, the identity interface service 302 may be in communication with one or more service providers/data repositories 310 and/or a data tier 312 via a pluggable layer 314. As noted above, by providing a pluggable layer 314, the one or more service providers/data repositories 310 may be added and/or removed to the service 302 on the fly and/or independent of the type of client application with which it may interact. In this way, the service 302 may maintain flexibility.

In some examples, the service providers/data repositories 310 may include one or more security policy services 316, access management services 318, directory services 320, databases 322, and/or identity stores 324 (e.g., lightweight directory access protocol (LDAP) servers). Additionally, according to some aspects, the service providers/data repositories 310 may be in communication with one or more pluggable services such as, but not limited to, an access software development kit (SDK) 326, a trust service 328, and/or an identity library 330. In some examples, the access SDK 326, the trust service 328, and/or the identity library 330 may collectively make up the interface layer for plugging the service providers/data repositories 310 into the identity interface service 302 via the pluggable layer 314. For example, the access SDK 326 may be responsible for plugging the access management service 318 into the service 302.

The identity interface service 302 may also include an administration module 332 for controlling, managing, or otherwise communicating with one or more runtime data stores 334, audit data stores 336, and/or configuration data stores 338 of the data tier 312. The data tier 312 may be in communication with the service 302 via an infrastructure platform 340 which may be configured to attach the data tier 312 as well as perform internal file management, logging, monitoring, and/or other administrative tasks. In some cases, the administration module 332 and the data tier 312 may be responsible for controlling, configuring, managing, and/or otherwise administering the services and/or data associated with the identity interface service 302. Additionally, the identity interface service 302 may also include a security filter 342, a request/response handler 344, one or more REST service engines 346, and/or a service provider interface (SPI) framework 348.

In some aspects, the security filter 342 may be configured to maintain the security of the REST API that is provided by the identity interface service 302. In this way, only authorized and/or authenticated client applications may be provided with the REST APIs and/or only API calls from authorized and/or authenticated client applications may be processed. The request/response handler 344 may be configured to receive requests from, and provide responses to, the client applications 304, 306, 308, etc. In some examples, the REST service engines 346 may be configured to govern policies of the identity interface service 302 such as, but not limited to, enforcing compliance with rules, enhancing infrastructure security, and/or streamlining service operations of the identity interface service 302.

Further, the SPI framework 348 may translate, map, or otherwise determine appropriate method calls and/or instructions for the service providers/data repositories 310. These method calls and/or instructions may be based at least in part on the REST API call received and/or the service provider with which the request is associated. For example, and without limitation, the request/response handler 344 may receive a request to update an identity relationship. The response may be formatted as a REST call from one of the client applications 304, 306, 308. The request/response handler 344 may forward the request to the SPI framework 348 where one or more different instructions or sets of instructions may be determined. For example, the instructions may be different depending on the service provider/data repository 310 for which the request was intended. That is, if the request was for a database 320, the SPI framework 348 may determine a different instruction (or set of instructions) for updating the identity relationship than if the request was for an LDAP identity store 324.

In some aspects, implementation of the SPI framework 348 may include utilizing one or more SPIs such as, but not limited to, an authentication SPI 350, an authorization SPI 352, a profile SPI 354, and/or other ID SPIs 356. Additionally, the authentication SPI 350 may be configured to provide interaction with one or more access management providers 358 and/or one or more trust service providers 360. The authorization SPI 352 may be configured to provide interaction with the one or more access management providers 358. The profile SPI 354 may be configured to provide interaction with one or more identity service providers 362 and/or directory service providers 364. Further, the other ID SPI 356 may be configured to provide interaction with one or more other service providers 366 such as, but not limited to, password management services, policy management services, token exchange services, and/or user provisioning services. In this way, one or more individual SPIs may be responsible for communicating with the service providers/data repositories 310 via the pluggable layer 314. That is, the SPI framework 348 may act as a proxy between the client applications 304, 306, 308 and the one or more service providers 310.

As noted above, some or all of the examples and/or aspects described above may provide technical effects for achieving improvements in the ease of use of various authenticated services (e.g., mobile applications and the like). Additionally, the above examples may also improve the security of user interactions with such mobile applications and, as such, may improve data security of the users, the mobile devices, and/or the mobile applications and teir associated web services. The foregoing technical effects, along with additional technical effects described below, solve the ongoing issues of data security and user authentication, particularly with respect to mobile devices and their associated applications and data.

Further, the example architectures, tools, and computing devices shown in Figures 1-3 are provided by way of example only. Numerous other operating environments, system architectures, and device configurations are possible. Accordingly, embodiments of the present disclosure should not be construed as being limited to any particular operating environment, system architecture, or device configuration.

### Illustrative Processes

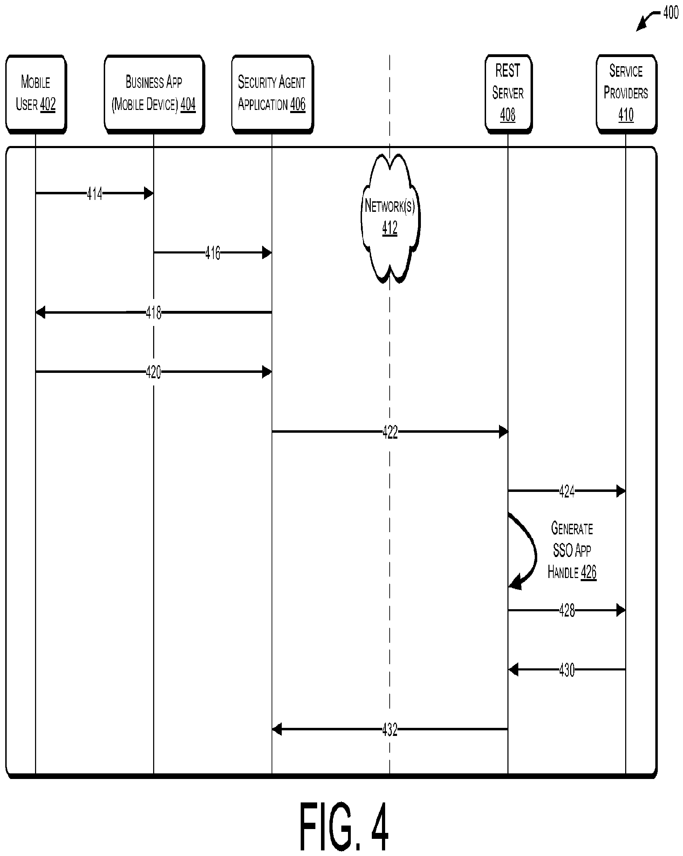

Figure 4 depicts a simplified process flow 400 of an example device registration performed in conjunction with the single sign-on (SSO) management as described above. In some examples, the simplified process flow 400 may be performed by one or more computing devices such as, but not limited to, the user devices 104 and/or the identity interface service computers 120 of Figure 1. In some aspects, a mobile user 402 may access a mobile device such as, but not limited to, the user device 104 of Figure 1 and/or the user device 202 of Figure 2. Additionally, in some examples, the mobile device may include a business application 404 (e.g., a browser application, a native application, etc.) and/or an SSO application 406 (e.g., the security agent application discussed above at least with reference to Figures 1, 2). Further, in some examples, the mobile device may interact with a REST server 408 (or other identity service) and/or one or more service providers 410 (e.g., an access management service and/or servers hosting data for the mobile applications of the mobile device) via one or more networks 412. As noted above, at least with reference to networks 114 of Figure 1 and/or the networks 216 of Figure 2, any number and/or combination of networks (wired and/or wireless) may be suitable.

In at least one non-limiting example, the process flow 400 may begin when the mobile user 402 attempts to access the business application 404, at 414. In response, the business application 404 may attempt to get (e.g., make a request for) session and/or access tokens from the security agent application 406, at 416. At 418, the security agent application 406 may present a log-in page to the mobile user 402 in order to request user credentials (e.g., user identifier (ID), password, etc.). In response, the mobile user 402 may provide such user credentials to the security agent application 406, at 420. In some examples, the security agent application 406 may then attempt to register the device of the mobile user 402 by providing the user credentials, attributes, and/or context information (e.g., the security agent application ID) to the REST server 408 via the networks 412, at 422. At 424, the REST server 408 may transmit an authentication request including the at least the user credentials to the service provider 410. In some examples, an SSO application handle may be generated at 426 to indicate a log-in and/or registration session, in some examples, in conjunction with the REST service 408 providing attributes and/or SSO application ID to the service provider 410, at 428. At 430, the service provider 410 may return a device handle for indicating the registration session for the mobile device. Further, at 432, the REST server 408 may transmit the SSO application handle and the device handle to the security agent application 406, thus indicating that the mobile device has been registered. That is, the process 400 may provide a device token to the mobile device which can be used to indicate that the mobile device has been registered for the SSO service.

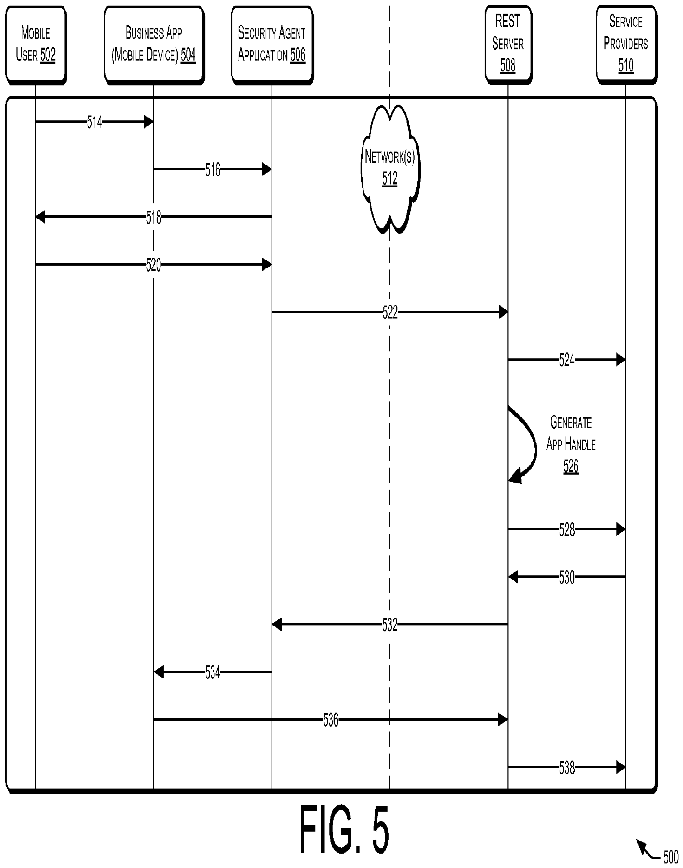

Figure 5 depicts a simplified process flow 500 of an example application registration performed in conjunction with the single sign-on (SSO) management as described above. In some examples, the simplified process flow 500 may be performed by one or more computing devices such as, but not limited to, the user devices 104 and/or the identity interface service computers 120 of Figure 1. In some aspects, a mobile user 502 may access a mobile device such as, but not limited to, the user device 104 of Figure 1 and/or the user device 202 of Figure 2. Additionally, in some examples, the mobile device may include a business application 504 (e.g., a browser application, a native application, etc.) and/or an SSO application 506 (e.g., the security agent application discussed above at least with reference to Figures 1, 2). Further, in some examples, the mobile device may interact with a REST server 508 (or other identity service) and/or one or more service providers 510 (e.g., an access management service and/or servers hosting data for the mobile applications of the mobile device) via one or more networks 512. As noted above, any number and/or combination of networks (wired and/or wireless) may be suitable.

In at least one non-limiting example, the process flow 500 may begin when the mobile user 502 attempts to access the business application 504, at 514. In response, the business application 504 may attempt to get (e.g., make a request for) session and/or access tokens from the security agent application 506, at 516. At 518, the security agent application 506 may present a log-in page to the mobile user 502 in order to request user credentials (e.g., user ID, password, etc.). In response, the mobile user 502 may provide such user credentials to the security agent application 506, at 520. In some examples, the security agent application 506 may then attempt to register the business application by providing the user credentials, attributes, and/or context information (e.g., the security agent application ID) to the REST server 508 via the networks 512, at 522. At 524, the REST server 508 may transmit an authentication request including the at least the user credentials to the service provider 510. In some examples, an SSO application handle may be generated, at 526 to indicate a log-in and/or registration session, in some examples, in conjunction with the REST service 508 providing attributes and/or SSO application ID to the service provider 510, at 528. At 530, the service provider 510 may return a device handle for indicating the registration session for the business application. Further, at 532, the REST server 508 may transmit the SSO application handle and the device handle to the security agent application 506, thus indicating that the business application has been registered. The security agent application 506 may then transmit the application handle to the business application at 534. That is, the process 500 may provide an application (or client) token to the business application which can be used to indicate that the application has been registered for the SSO service. At 536, the business application 504 may transmit a request to get an access token from the REST server 508. The REST server may provide the access token and/or may forward the request to the appropriate service provider 510, at 538.

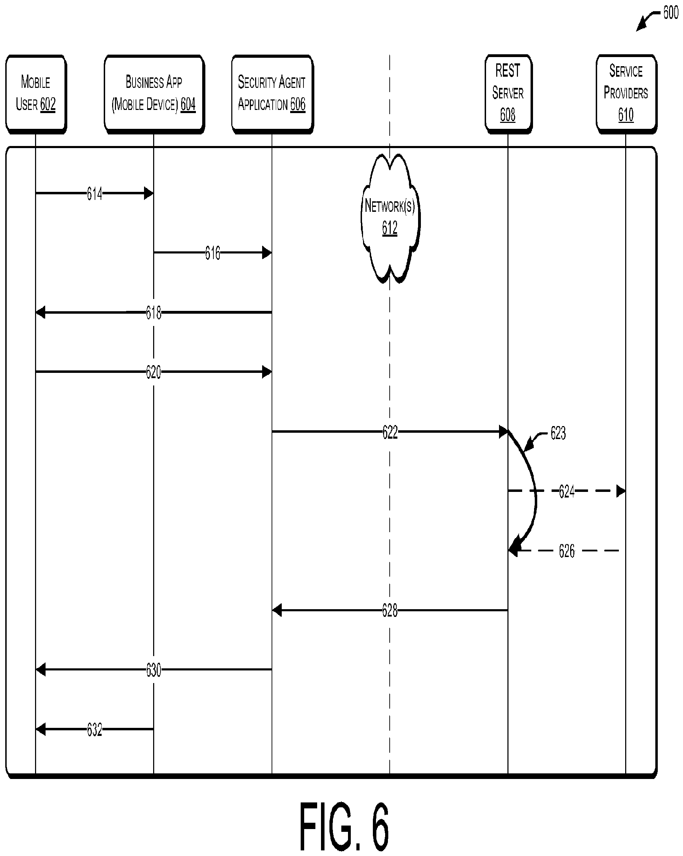

Figure 6 depicts a simplified process flow 600 of an example user log-in performed in conjunction with the single sign-on (SSO) management as described above. In some examples, the simplified process flow 600 may be performed by one or more computing devices such as, but not limited to, the user devices 104 and/or the identity interface service computers 120 of Figure 1. In this example, a mobile user 602 may access a mobile device such as, but not limited to, the user device 104 of Figure 1 and/or the user device 202 of Figure 2. Additionally, in some examples, the mobile device may include a business application 604 (e.g., a native application including, but not limited to, a tax application, a directory application, an expense report application, etc.) and/or an security agent application 606 (e.g., the security agent application discussed above at least with reference to Figures 1, 2). Further, in some examples, the mobile device may interact with a REST server 608 (or other identity service) and/or one or more service providers 610 (e.g., an access management service, an identity service, and/or servers hosting data for the mobile applications of the mobile device) via one or more networks 612. As noted above, any number and/or combination of networks (wired and/or wireless) may be suitable.

In at least one non-limiting example, the process flow 600 may describe a scenario when the mobile user 602 specifically uses a business application 604 of the mobile device (i.e., a native application of the mobile device is used as opposed to a browser application of the mobile device). The process flow 600 may begin when the mobile user 602 attempts to access the business application 604, at 614. In response, the business application 604 may attempt to get (e.g., make a request for) session and/or access tokens from the security agent application 606, at 616. At 618, the security agent application 606 may present a log-in page to the mobile user 602 in order to request user credentials (e.g., user ID, password, etc.). In response, the mobile user 602 may provide such user credentials to the security agent application 606, at 620. In some examples, the security agent application 606 may then attempt to register and/or authenticate the business application 604 by providing the user credentials, attributes, and/or context information (e.g., the security agent application ID) to the REST server 608 via the networks 612, at 622. In one example the REST server 608 may authenticate the mobile user 602, at 623, and generate or otherwise obtain user and/or access tokens for the mobile device and/or mobile user 602. However, in other examples, any other service provider such as the service provider 610 may perform the authentication. In this case, the REST server 608 may receive user and/or access tokens from the service provider 610, at 626. Either way, at 628, the REST server 608 may provide the user and/or access tokens to the security agent application 606 via the networks 612. At 630, the security agent application 606 may provide the user and/or access tokens to the business application 604 and/or to the mobile user 602. The business application 604 may then provide application content (e.g., a page from a server or a page containing local content) to the mobile user 602, at 632.

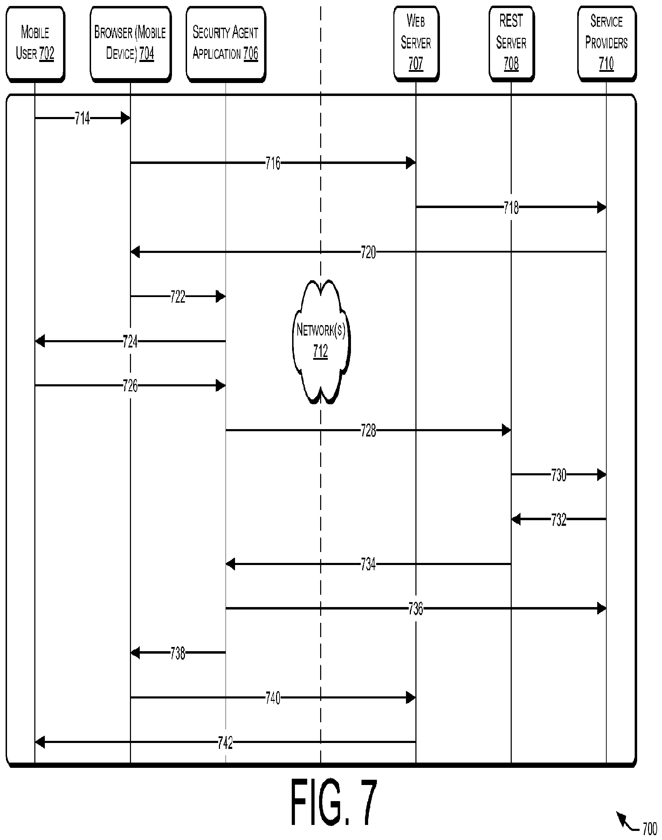

Figure 7 depicts a simplified process flow 700 of an example user log-in performed in conjunction with the single sign-on (SSO) management as described above. In some examples, the simplified process flow 700 may be performed by one or more computing devices such as, but not limited to, the user devices 104 and/or the identity interface service computers 120 of Figure 1. In this example, a mobile user 702 may access a mobile device such as, but not limited to, the user device 104 of Figure 1 and/or the user device 202 of Figure 2. Additionally, in some examples, the mobile device may include a browser application 704 (e.g., a web browser) and/or an security agent application 706 (e.g., the security agent application discussed above at least with reference to Figures 1, 2). Further, in some examples, the mobile device may interact with a web server 707 (e.g., the web application 110 of Figure 1 configured to serve web pages), a REST server 708 (or other identity service), and/or one or more service providers 710 (e.g., an access management service, an identity service, and/or servers hosting data for the mobile applications of the mobile device) via one or more networks 712. As noted above, any number and/or combination of networks (wired and/or wireless) may be suitable.

In at least one non-limiting example, the process flow 700 may describe a scenario when the mobile user 702 specifically uses a browser application 704 of the mobile device (i.e., a web browser of the mobile device is used as opposed to a native and/or business application of the mobile device). The process flow 700 may begin when the mobile user 702 attempts to access the browser application 704, at 714. In response, the browser application 704 may communicate this access attempt to the web server 707 via the networks 712, at 716. In some instances, the web server 708 may provide the access request information to the service providers 710 (e.g., an identity management application or service), at 718, to indicate to the service provider 710 that authentication may be requested in a future communication. At 720, the service provider 710 may indicate or otherwise instruct the browser application 704, via the networks 712, to request user credentials from the mobile user 702. Based at least on some configurations, the browser application 704 may redirect the user credential request to the security agent application 706, at 722. At 724, the security agent application 706 may present a log-in page to the mobile user 702 in order to request user credentials (e.g., user ID, password, etc.). In response, the mobile user 702 may provide such user credentials to the security agent application 706, at 726.

In some examples, the security agent application 706 may then attempt to register and/or authenticate the browser application 704 by providing the user credentials, attributes, and/or context information (e.g., the security agent application ID) to the REST server 708 via the networks 712, at 728. In one example the REST server 708 may authenticate the mobile user 702 and generate or otherwise obtain user and/or access tokens for the mobile device and/or mobile user 702. However, in other examples, any other service provider such as the service provider 710 may perform the authentication. In this case, the REST server 708 may transmit the credentials to the service provider 710, at 730, and receive user and/or access tokens from the service provider 710, at 732. Either way, at 734, the REST server 708 may provide the user and/or access tokens to the security agent application 706 via the networks 712. At 736, the security agent application 706 may make a Web View or other method call to the service provider 710 in order to inject a cookie. In some aspects, the security agent application 706 may also redirect appropriate information to the browser application, at 738, indicating which web pages should be served to the mobile user 702. At 740, the browser application 704 may redirect this information to the web server 707. Further, at 742, the web server 707 may serve the requested web pages to the mobile user 702.

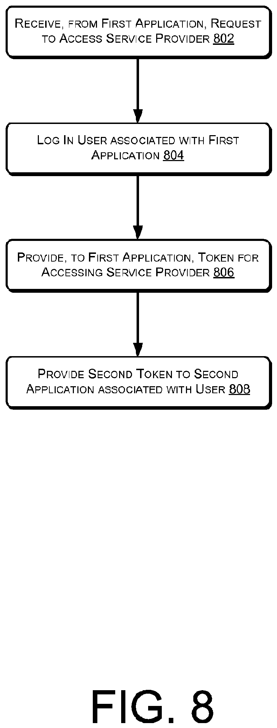

Figures 8-10 illustrate simplified example flow diagrams showing respective processes 800, 900, and 1000 for providing single sign-on management. These processes are illustrated as logical flow diagrams, each operation of which represents a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be combined in any order and/or in parallel to implement the processes.

Additionally, some, any, or all of the processes may be performed under the control of one or more computer systems configured with executable instructions and may be implemented as code (e.g., executable instructions, one or more computer programs, or one or more applications) executing collectively on one or more processors, by hardware, or combinations thereof. As noted above, the code may be stored on a computer-readable storage medium, for example, in the form of a computer program comprising a plurality of instructions executable by one or more processors. The computer-readable storage medium may be non-transitory.

In some aspects, the process 800 of Figure 8 may be performed by the one or more user devices 102 and/or identity interface service computers 120 of Figure 1. The process 800 may begin at 802 by receiving a request to access a service provider. The request may be received from a first application of a mobile device. In some aspects, the first application may be a native application or a browser application. Additionally, in some cases, the request may be received by a security agent application (e.g., a helper application and/or authentication delegation application) of the mobile device. At 804, the process 800 may log in a user associated with the first application (e.g., the user of the mobile device). In some examples, in response to logging in the user, the process 800 may provide a token for accessing the service provider to the first application, at 806. The process 800 may end, at 808, by providing a second token to a second application of the mobile device that is associated with the user. In this way, single sign-on may be achieved and the user does not need to be authenticated multiple times to access multiple service providers via multiple applications.

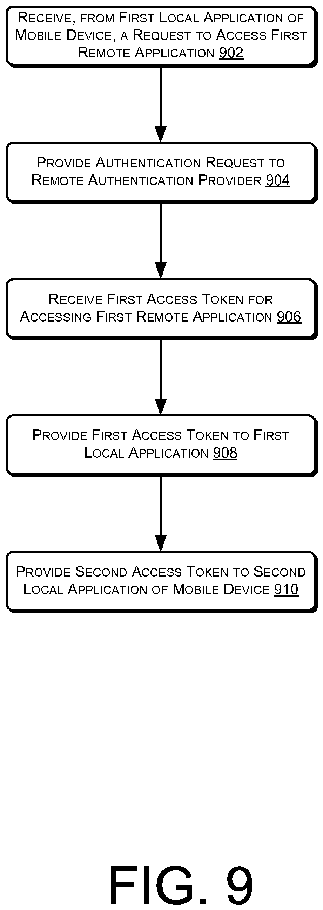

Figure 9 illustrates a simplified example flow diagram showing the process 900 for providing features of single sign-on management. In some aspects, the process 900 of Figure 9 may be performed by the one or more user devices 102 and/or identity interface service computers 120 of Figure 1. The process 900 may begin at 902 by receiving a request to access a first remote application. The remote application may be a server or other computer configured to provide application functionality to a mobile application or mobile device. In some cases, the request may be received from a first local application of a mobile device, the local application configured to communicate or otherwise receive content from the remote application. The first local application may be "local" in that it is executed by or otherwise resides on the mobile device. At 904, the process 900 may provide an authentication request (e.g., based at least in part on the access request) to a remote authentication provider. The process 900 may also receive a first access token for accessing the first remote application, at 906. In some cases, the first access token may be received from the remote authentication provider. At 908, the process 900 may provide the first access token to the first local application. At 910, the process 900 may end by providing a second access token to a second local application of the mobile device. This second access token may be for allowing the second local application to access a second remote application. In some cases, the process 900 may provide the first and/or second access tokens to the first and/or second local applications, respectively, based at least in part on a successful log-in of a user, of the mobile device, and/or of the first and/or second local application.

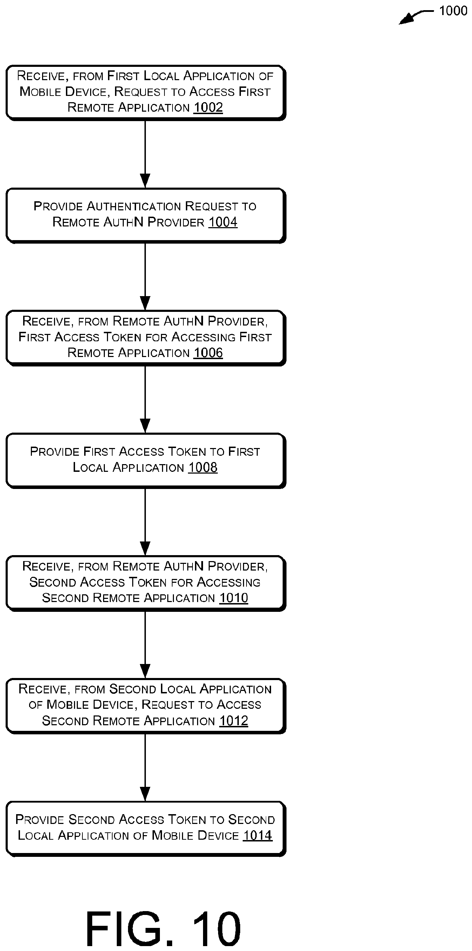

Figure 10 illustrates a simplified example flow diagram showing the process 1000 for providing features of single sign-on management. In some aspects, the process 1000 of Figure 10 may be performed by the one or more user devices 102 and/or identity interface service computers 120 of Figure 1. The process 1000 may begin by receiving, from a first local application of a mobile device, a request to request to access a first remote application. As noted above, the remote application may be a web service, a web server, and/or any service configured to provide data, processing, and/or services to the local application. At 1004, the process 1000 may provide an authentication request to a remote authentication provider. In some examples, at 1006, the process 1000 may also receive, from the remote authentication provider, a first access token for accessing the first remote application. That is, the first local application may need the access token in order to access the first remote application, indicating that the user, the mobile device, and/or the local application have been authenticated. At 1008, the process 1000 may provide the first access token to the first local application. In some examples, the process 1000 may also receive, at 1010, from the remote authentication provider, a second access token for accessing a second remote application. That is, since the user, mobile device, and/or local application have already been authenticated, the remote authentication device may proactively provide access tokens for accessing other remote applications that are within a particular trusted group (e.g., a circle of trust or circle of trust). At 1012, the process 1000 may receive, from a second local application of the mobile device, a request to access the second remote application. In this example, the process 1000 has already received the access token for accessing the second remote application. Thus, the process 1000 may end, at 1014, by providing the second access token to the second local application.

### Illustrative Systems

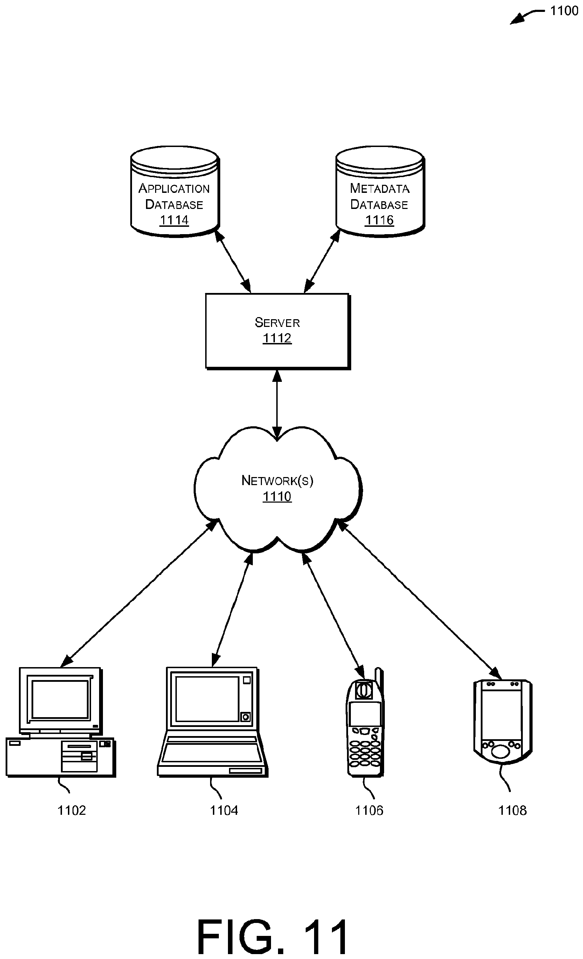

Figure 11 is a simplified block diagram illustrating components of a system environment 1100 that may be used in accordance with an embodiment of the present disclosure. As shown, system environment 1100 includes one or more client computing devices 1102, 1104, 1106, 1108, which are configured to operate a client application such as a web browser, proprietary client (e.g., Oracle Forms), or the like. In various embodiments, client computing devices 1102, 1104, 1106, and 1108 may interact with a server 1112.

Client computing devices 1102, 1104, 1106, 1108 may be general purpose personal computers (including, by way of example, personal computers and/or laptop computers running various versions of Microsoft Windows and/or Apple Macintosh operating systems), cell phones or PDAs (running software such as Microsoft Windows Mobile and being Internet, e-mail, SMS, Blackberry, or other communication protocol enabled), and/or workstation computers running any of a variety of commercially-available UNIX or UNIX-like operating systems (including without limitation the variety of GNU/Linux operating systems). Alternatively, client computing devices 1102, 1104, 1106, and 1108 may be any other electronic device, such as a thin-client computer, Internet-enabled gaming system, and/or personal messaging device, capable of communicating over a network (e.g., network 1110 described below). Although exemplary system environment 1100 is shown with four client computing devices, any number of client computing devices may be supported. Other devices such as devices with sensors, etc. may interact with server 1112.

System environment 1100 may include a network 1110. Network 1110 may be any type of network familiar to those skilled in the art that can support data communications using any of a variety of commercially-available protocols, including without limitation TCP/IP, SNA, IPX, AppleTalk, and the like. Merely by way of example, network 1110 can be a local area network (LAN), such as an Ethernet network, a Token-Ring network and/or the like; a wide-area network; a virtual network, including without limitation a virtual private network (VPN); the Internet; an intranet; an extranet; a public switched telephone network (PSTN); an infra-red network; a wireless network (e.g., a network operating under any of the IEEE 802.11 suite of protocols, the Bluetooth protocol known in the art, and/or any other wireless protocol); and/or any combination of these and/or other networks.

System environment 1100 also includes one or more server computers 1112 which may be general purpose computers, specialized server computers (including, by way of example, PC servers, UNIX servers, mid-range servers, mainframe computers, rack-mounted servers, etc.), server farms, server clusters, or any other appropriate arrangement and/or combination. In various embodiments, server 1112 may be adapted to run one or more services or software applications described in the foregoing disclosure. For example, server 1112 may correspond to a server for performing processing described above according to an embodiment of the present disclosure.

Server 1112 may run an operating system including any of those discussed above, as well as any commercially available server operating system. Server 1112 may also run any of a variety of additional server applications and/or mid-tier applications, including HTTP servers, FTP servers, CGI servers, Java servers, database servers, and the like. Exemplary database servers include without limitation those commercially available from Oracle, Microsoft, Sybase, IBM and the like.

System environment 1100 may also include one or more databases 1114, 1116. Databases 1114, 1116 may reside in a variety of locations. By way of example, one or more of databases 1114, 1116 may reside on a non-transitory storage medium local to (and/or resident in) server 1112. Alternatively, databases 1114, 1116 may be remote from server 1112, and in communication with server 1112 via a network-based or dedicated connection. In one set of embodiments, databases 1114, 1116 may reside in a storage-area network (SAN) familiar to those skilled in the art. Similarly, any necessary files for performing the functions attributed to server 1112 may be stored locally on server 1112 and/or remotely, as appropriate. In one set of embodiments, databases 1114, 1116 may include relational databases, such as databases provided by Oracle, that are adapted to store, update, and retrieve data in response to SQL-formatted commands.

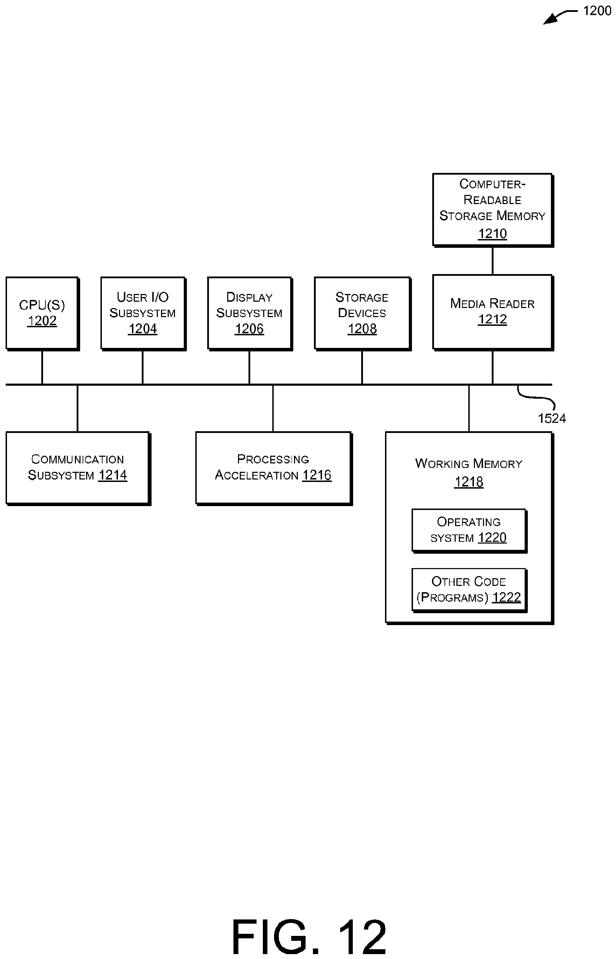

Figure 12 is a simplified block diagram of a computer system 1200 that may be used in accordance with embodiments of the present disclosure. For example servers 122 and/or 1212 may be implemented using a system such as system 1200. Computer system 1200 is shown comprising hardware elements that may be electrically coupled via a bus 1224. The hardware elements may include one or more central processing units (CPUs) 1202, one or more input devices 1204 (e.g., a mouse, a keyboard, etc.), and one or more output devices 1206 (e.g., a display device, a printer, etc.). Computer system 1200 may also include one or more storage devices 1208. By way of example, the storage device(s) 1208 may include devices such as disk drives, optical storage devices, and solid-state storage devices such as a random access memory (RAM) and/or a read-only memory (ROM), which can be programmable, flash-updateable and/or the like.

Computer system 1200 may additionally include a computer-readable storage media reader 1212, a communications subsystem 1214 (e.g., a modem, a network card (wireless or wired), an infra-red communication device, etc.), and working memory 1218, which may include RAM and ROM devices as described above. In some embodiments, computer system 1200 may also include a processing acceleration unit 1216, which can include a digital signal processor (DSP), a special-purpose processor, and/or the like.

Computer-readable storage media reader 1212 can further be connected to a computer-readable storage medium 1210, together (and, optionally, in combination with storage device(s) 1208) comprehensively representing remote, local, fixed, and/or removable storage devices plus storage media for temporarily and/or more permanently containing computer-readable information. Communications system 1214 may permit data to be exchanged with network 1212 and/or any other computer described above with respect to system environment 1200.

Computer system 1200 may also comprise software elements, shown as being currently located within working memory 1218, including an operating system 1220 and/or other code 1222, such as an application program (which may be a client application, Web browser, mid-tier application, RDBMS, etc.). In an exemplary embodiment, working memory 1218 may include executable code and associated data structures used for relying party and open authorization-related processing as described above. It should be appreciated that alternative embodiments of computer system 1200 may have numerous variations from that described above. For example, customized hardware might also be used and/or particular elements might be implemented in hardware, software (including portable software, such as applets), or both. Further, connection to other computing devices such as network input/output devices may be employed.

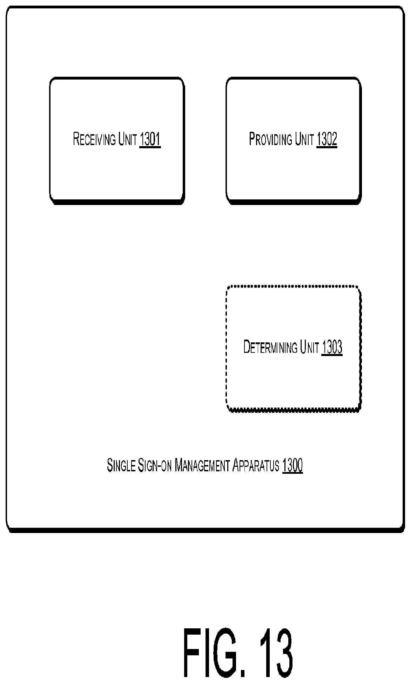

Figure 13 is a simplified block diagram illustrating a single sign-on management apparatus 1300 according to one example. The blocks of the single sign-on management apparatus 1300 may be implemented by hardware, software, or a combination of hardware and software to carry out the principles of the invention. It is understood by persons of skill in the art that the blocks described in Figure 13 may be combined or separated into sub-blocks to implement the principles of the invention as described above. Therefore, the description herein may support any possible combination or separation or further definition of the functional blocks described herein.

As shown in Fig.13, the single sign-on management apparatus 1300 comprises receiving unit 1301 and providing unit in some embodiments. In other embodiments, the single sign-on management apparatus 1300 further comprises determining unit 1303.

In some embodiments, the receiving unit 1301 is configured to receive, from the first application, an authentication request associated with the second application. The providing unit 1302 is configured to provide, to the first application, an access token for allowing the second application to access a service provider accessible to the first application or the second application. The determining unit 1303 is configured to determine, based at least in part on a credential included in the authentication request, when the user is authenticated, and wherein the determination is based at least in part on receiving, from a third-party service, an indication that the user is authenticated.

Preferably, the first application comprises a security agent application of a mobile device, the security agent application configured to provide single sign-on for at least one of the second application and other applications of the mobile device.

Preferably, the first application comprises a native application of a mobile device, the native application configured to provide single sign-on for at least one of the second application and other applications of the mobile device.

Preferably, the native application is configured with an embedded web browser.

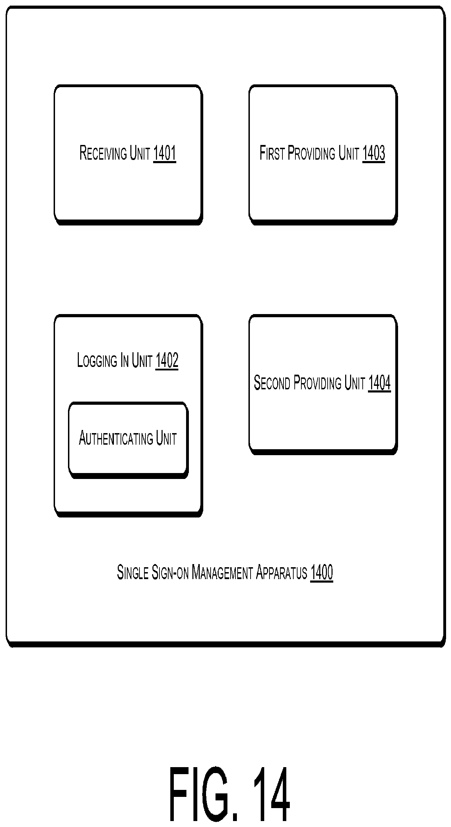

Figure 14 is a simplified block diagram illustrating a single sign-on management apparatus 1400 according to another example. The blocks of the single sign-on management apparatus 1400 may be implemented by hardware, software, or a combination of hardware and software to carry out the principles of the invention. It is understood by persons of skill in the art that the blocks described in Figure 14 may be combined or separated into sub-blocks to implement the principles of the invention as described above. Therefore, the description herein may support any possible combination or separation or further definition of the functional blocks described herein.

As shown in Fig. 14, the single sign-on management apparatus 1400 comprises receiving unit 1401, logging in unit 1402, first providing unit 1403 and second providing unit 1404.

In some embodiments, the receiving unit 1401 is configured to receive, from a first application, a request to access a service provider. The logging in unit 1402 is configured to log in a user associated with the first application. The first providing unit 1403 is configured to provide, to the first application, a token for accessing the service provider. The second providing unit 1404 is configured to provide a second token to a second application associated with the user.

Preferably, the first application comprises a security agent application of a mobile device configured to provide single sign-on for the second application.

Preferably, the second application comprises a browser application of the mobile device associated with a web application service provider, a native application of the mobile device associated with an application service provider, or a hybrid application of the mobile device configured as a native application with an embedded browser associated with a hybrid application service provider.

Preferably, the first application comprises a browser application of a mobile device associated with a web application service provider and the second application comprises a native application of the mobile device associated with an application service provider.

Preferably, the first application comprises a native application of a mobile device associated with an application service provider.

Preferably, the second application comprises a browser application of the mobile device associated with a web application service provider.

Preferably, the second application comprises a second native application of the mobile device associated with a second application service provider.

Preferably, the logging in unit 1402 comprises authenticating unit which authenticates the user with authentication service using a representational state transfer (REST) method call.

Preferably, the second token provided to the second application enables the second application to log in to an application service provider associated with the second application on behalf of the user without the user providing log-in credentials to log in to the application service provider associated with the second application.

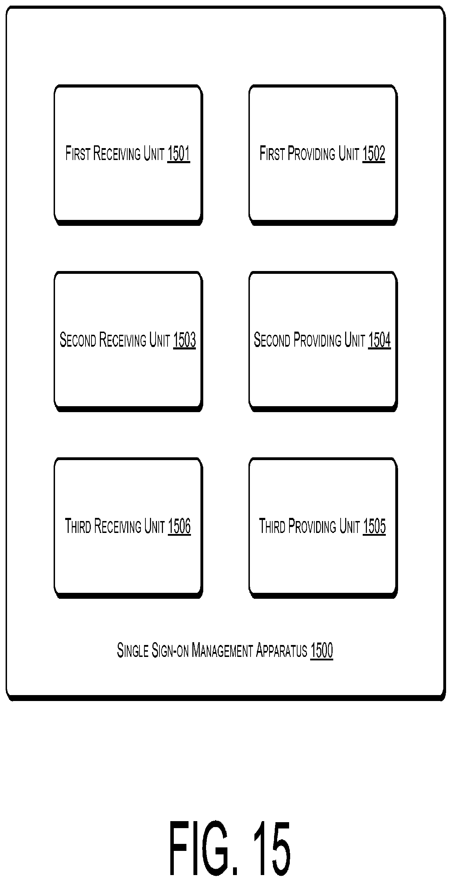

Figure 15 is a simplified block diagram illustrating a single sign-on management apparatus 1500 according to still another example. The blocks of the single sign-on management apparatus 1500 may be implemented by hardware, software, or a combination of hardware and software to carry out the principles of the invention. It is understood by persons of skill in the art that the blocks described in Figure 15 may be combined or separated into sub-blocks to implement the principles of the invention as described above. Therefore, the description herein may support any possible combination or separation or further definition of the functional blocks described herein.

As shown in Fig.15, the single sign-on management apparatus 1500 comprises first receiving unit 1501, first providing unit 1502, second receiving unit 1503, second providing unit 1504 and third providing unit 1505.

In some embodiments, the first receiving unit 1501 is configured to receive a request to access a first remote application, the request received from a first local application of a mobile device. The first providing unit 1502 is configured to provide an authentication request to a remote authentication service provider computer. The second receiving unit 1503 is configured to receive a first access token for accessing the first remote application. The second providing unit 1504 is configured to provide the first access token to the first local application. The third providing unit 1505 is configured to provide a second access token for accessing a second remote application, the second access token provided to a second local application of the mobile device.

Preferably, the authentication request is provided to the remote authentication service provider as a representational state transfer (REST) method call.

Preferably, the authentication request is provided to request authentication of a user of the mobile device.

Preferably, the first access token is received from the remote authentication service provider based at least in part on authentication of the user.

Preferably, the single sign-on management apparatus 1400 further comprises a third receiving unit 1506 which receives the second access token from the remote authentication service provider.

Preferably, the second access token is provided to the second local application at least in response to a request from the second local application to access the second remote application.

According to one aspect of the invention, there is provided a method for single sign-on management, which comprises: receiving, from a first application, an authentication request associated with a second application; and providing, to the first application, an access token for allowing the second application to access a service provider accessible to the first application or the second application.

According to another aspect of the invention, there is provided a system for single sign-on management, which comprises: means for receiving, from a first application, an authentication request associated with a second application; and means for providing, to the first application, an access token for allowing the second application to access a service provider accessible to the first application or the second application.

According to one aspect of the invention, there is also provided a method for single sign-on management, which comprises: receiving, from a first application, a request to access a service provider.; logging in a user associated with the first application; providing, to the first application, a token for accessing the service provider; and provide a second token to a second application associated with the user.

According to one aspect of the invention, there is also provided a system for single sign-on management, which comprises: means for receiving, from a first application, a request to access a service provider.; means for logging in a user associated with the first application; means for providing, to the first application, a token for accessing the service provider; and means for provide a second token to a second application associated with the user.

According to one aspect of the invention, there is also provided a system for single sign-on management, which comprises: means for receiving a request to access a first remote application, the request received from a first local application of a mobile device; means for providing an authentication request to a remote authentication service provider computer; means for receiving a first access token for accessing the first remote application; means for providing the first access token to the first local application; and means for providing a second access token for accessing a second remote application, the second access token provided to a second local application of the mobile device.

Storage media and computer readable media for containing code, or portions of code, can include any appropriate media known or used in the art, including storage media and communication media, such as but not limited to, volatile and non-volatile (non-transitory), removable and non-removable media implemented in any method or technology for storage and/or transmission of information such as computer readable instructions, data structures, program modules, or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices, data signals, data transmissions, or any other medium which can be used to store or transmit the desired information and which can be accessed by a computer.

Although specific embodiments of the disclosure have been described, various modifications, alterations, alternative constructions, and equivalents are also encompassed within the scope of the disclosure. Embodiments of the present disclosure are not restricted to operation within certain specific data processing environments, but are free to operate within a plurality of data processing environments. Additionally, although embodiments of the present disclosure have been described using a particular series of transactions and steps, it should be apparent to those skilled in the art that the scope of the present disclosure is not limited to the described series of transactions and steps.

Further, while embodiments of the present disclosure have been described using a particular combination of hardware and software, it should be recognized that other combinations of hardware and software are also within the scope of the present disclosure. Embodiments of the present disclosure may be implemented only in hardware, or only in software, or using combinations thereof.

The specification and drawings are, accordingly, to be regarded in an illustrative rather than a restrictive sense. It will, however, be evident that additions, subtractions, deletions, and other modifications and changes may be made thereunto without departing from scope of the invention defined by the appended claims.

## Claims

1. A computer-readable memory storing a plurality of instructions executable by one or more processors of a mobile device, the plurality of instructions comprising:
instructions that cause the one or more processors to receive (802), by a security agent of the mobile device, a request to access a first remote service provider, the request provided to the security agent by a first local application of the mobile device;
instructions that cause the one or more processors to log in (804) a user associated with the first application to a remote authentication service provider, by the security agent transmitting a log in request;
instructions that cause one or more processors to receive, by the security agent from the remote authentication service provider in response to the log in request, a first token for accessing the first remote service provider and a second token for accessing a second remote service provider;
instructions that cause the one or more processors to provide (806), to the first local application by the security agent of the mobile device, the first token for accessing the first remote service provider; and
instructions that cause the one or more processors to provide (808), to a second local application associated with the user, by the security agent of the mobile device, the second token for accessing the second remote service provider; wherein the first and second local applications are within a single sign-on group, and wherein the second token provided to the second local application is a second token for enabling the second local application to log in to a second remote service provider associated with the second local application on behalf of the user without the user providing log-in credentials to log in to the second remote service provider associated with the second local application.

2. The computer-readable memory of claim 1, wherein the security agent application of a mobile device configured to provide single sign-on for the second application, and wherein the second application preferably comprises a browser application of the mobile device associated with a web application service provider, a native application of the mobile device associated with an application service provider, or a hybrid application of the mobile device configured as a native application with an embedded browser associated with a hybrid application service provider.

3. The computer-readable memory of claim 1, wherein the first application comprises a browser application of a mobile device associated with a web application service provider and the second application comprises a native application of the mobile device associated with an application service provider.

4. The computer-readable memory of claim 1, wherein the first application comprises a native application of a mobile device associated with an application service provider.

5. The computer-readable memory of claim 4, wherein the second application comprises a browser application of the mobile device associated with a web application service provider, or wherein the second application comprises a second native application of the mobile device associated with a second application service provider.

6. The computer-readable memory of any of claims 1 to 5, wherein the log in comprises authenticating the user with authentication service using a representational state transfer, REST, method call.

7. A computer-implemented method configured to be executed by one or more computer processors of a mobile device, the method comprising:
receiving (902), by the processor, a request to access a first remote application, the request received at a security agent application of the mobile device from a first local application of a mobile device;
providing (904), by the security agent application, an authentication request to a remote authentication service provider computer;
receiving (906), by the security agent application, from the remote authentication service provider in response to the log in request, a first access token for accessing the first remote application a second token for accessing a second remote application;
providing (908), by the security agent application, the first access token to the first local application; and
providing (910), by the security agent application, the second access to a second local application of the mobile device; wherein the first and second local applications are within a single sign-on group, and wherein the second token provided to the second local application is a second token for enabling the second local application to log in to the second remote application associated with the second local application on behalf of the user without the user providing log-in credentials to log in to the second remote application associated with the second local application.

8. The computer-implemented method of claim 7, wherein the authentication request is provided to the remote authentication service provider as a representational state transfer, REST, method call.

9. The computer-implemented method of claim 7 or 8, wherein the authentication request is provided to request authentication of a user of the mobile device, wherein the first access token is preferably received from the remote authentication service provider based at least in part on authentication of the user.

10. The computer-implemented method of any of claims 7 to 9, further comprising receiving, by the computing system, the second access token from the remote authentication service provider, or wherein the second access token is provided to the second local application at least in response to a request from the second local application to access the second remote application.

11. A program that causes a computer to perform the method of any of claims 7 to 10.

12. A system, comprising:
a computer-readable memory according to any of claims 1 to 6; and
one or more processors configured to access the memory and to cause the system to execute the instructions therein.

## Patentansprüche

1. Computerlesbarer Speicher, der eine Vielzahl von Befehlen speichert, die von einem oder mehreren Prozessoren eines mobilen Geräts ausführbar sind, wobei die Vielzahl von Befehlen umfasst:
Befehle, die bewirken, dass der eine oder die mehreren Prozessoren, durch einen Sicherheitsagenten des mobilen Geräts, eine Anforderung empfangen (802) auf einen ersten fernen Dienstanbieter zuzugreifen, wobei die Anforderung dem Sicherheitsagenten von einer ersten lokalen Anwendung des mobilen Geräts bereitgestellt wird;
Befehle, die bewirken, dass der eine oder die mehreren Prozessoren einen Benutzer einloggen (804), der mit der ersten Anwendung an einen fernen Authentifizierungs-Dienstanbieter verbunden ist, indem der Sicherheitsagent eine Log-in-Anforderung sendet;
Befehle, die bewirken, dass der eine oder die mehreren Prozessoren, durch den Sicherheitsagenten vom fernen Authentifizierungs-Dienstanbieter, als Antwort auf die Log-in-Anforderung, einen ersten Token für Zugriff auf den ersten fernen Dienstanbieter und einen zweiten Token für Zugriff auf einen fernen zweiten Dienstanbieter empfangen;
Befehle, die bewirken, dass der eine oder die mehreren Prozessoren, der ersten lokalen Anwendung durch den Sicherheitsagenten des mobilen Geräts, den ersten Token für Zugriff auf den ersten Dienstanbieter bereitstellen (806); und
Befehle, die bewirken, dass der eine oder die mehreren Prozessoren einer zweiten lokalen Anwendung, die mit dem Benutzer assoziiert ist, durch den Sicherheitsagenten des mobilen Geräts, den zweiten Token für Zugriff auf den zweiten fernen Dienstanbieter bereitstellt (808); wobei die ersten und zweiten lokalen Anwendungen innerhalb einer einzelnen Anmeldungsgruppe sind, und wobei der zweite Token, welcher der zweiten lokalen Anwendung bereitgestellt wird, ein zweiter Token zum Befähigen der zweiten lokalen Anwendung ist, sich in einen zweiten fernen Dienstanbieter, der mit der zweiten lokalen Anwendung assoziiert ist, im Namen des Benutzers einzuloggen, ohne dass der Benutzer Log-in-Anmeldedaten bereitstellt, um sich in den zweiten fernen Dienstanbieter mit der zweiten lokalen Anwendung einzuloggen.

2. Computerlesbarer Speicher nach Anspruch 1, wobei die Sicherheitsagenten-Anwendung eines mobilen Geräts konfiguriert ist, einzelne Anmeldung für die zweite Anwendung bereitzustellen, und wobei die zweite Anwendung vorzugsweise eine Browser-Anwendung des mobilen Geräts, die mit einem Web-Anwendungs-Dienstanbieter assoziiert ist, eine native Anwendung des mobilen Geräts, die mit einem Anwendungs-Dienstanbieter assoziiert ist oder eine hybride Anwendung des mobilen Geräts umfasst, die als eine native Anwendung mit einem eingebetteten Browser konfiguriert ist, der mit einem hybriden Anwendungs-Dienstanbieter assoziiert ist.

3. Computerlesbarer Speicher nach Anspruch 1, wobei die erste Anwendung eine Browser-Anwendung eines mobilen Geräts umfasst, die mit einem Web-Anwendungs-Dienstanbieter assoziiert ist und die zweite Anwendung eine native Anwendung des mobilen Geräts umfasst, die mit einem Anwender-Dienstanbieter assoziiert ist.

4. Computerlesbarer Speicher nach Anspruch 1, wobei die erste Anwendung eine native Anwendung eines mobilen Geräts umfasst, die mit einem Anwendungs-Dienstanbieter assoziiert ist.

5. Computerlesbarer Speicher nach Anspruch 4, wobei die zweite Anwendung eine Browser-Anwendung des mobilen Geräts umfasst, die mit einem Web-Anwendungs-Dienstanbieter assoziiert ist, oder wobei die zweite Anwendung eine native Anwendung des mobilen Geräts umfasst, die mit einem zweiten Anwender-Dienstanbieter assoziiert ist.

6. Computerlesbarer Speicher nach einem der Ansprüche 1 bis 5, wobei das Einloggen die Authentifizierung des Benutzers mit einem Authentifizierungs-Service unter Verwendung eines "Representational State Transfer", REST, Verfahrensanrufs.

7. Computerimplementiertes Verfahren, das konfiguriert ist, von einem oder mehreren Computerprozessoren eines mobilen Geräts ausgeführt zu werden, wobei das Verfahren umfasst:
Empfangen (902), durch den Prozessor, einer Anforderung auf eine erste ferne Anwendung zuzugreifen, wobei die Anforderung an einer Sicherheitsagenten-Anwendung des mobilen Geräts von einer ersten lokalen Anwendung eines mobilen Geräts empfangen wird;
Bereitstellen (904), durch die Sicherheitsagenten-Anwendung, einer Authentifizierungsanforderung an einen fernen Authentifizierungs-Dienstanbieter-Computer;
Empfangen (906), durch die Sicherheitsagenten-Anwendung, vom fernen Authentifizierungs-Dienstanbieter, als Antwort auf die Log-in-Anforderung, eines ersten Tokens für Zugriff auf die erste ferne Anwendung, eines zweiten Tokens für Zugriff auf eine zweite ferne Anwendung;
Bereitstellen (908), durch die Sicherheitsagenten-Anwendung, des ersten Tokens für Zugriff an die erste lokale Anwendung; und
Bereitstellen (910), durch die Sicherheitsagenten-Anwendung, des zweiten Zugriffs auf eine zweite lokale Anwendung des mobilen Geräts; wobei die ersten und zweiten lokalen Anwendungen innerhalb einer einzelnen Anmeldungsgruppe sind, und wobei der zweite Token, welcher der zweiten lokalen Anwendung bereitgestellt wird, ein zweiter Token zum Befähigen der zweiten lokalen Anwendung ist, sich in die zweite ferne Anwendung, die mit der zweiten lokalen Anwendung assoziiert ist, im Namen des Benutzers einzuloggen, ohne dass der Benutzer Log-in-Anmeldedaten bereitstellt, um sich in die zweite ferne Anwendung mit der zweiten lokalen Anwendung einzuloggen.

8. Computerlesbares Verfahren nach Anspruch 7, wobei die Authentifizierungsanforderung dem Authentifizierungs-Dienstanbieter als ein "Representational State Transfer", REST, Verfahrensanruf bereitgestellt wird.

9. Computerimplementiertes Verfahren nach Anspruch 7 oder 8, wobei die Authentifizierungsanforderung bereitgestellt wird, um Authentifizierung eines Benutzers des mobilen Geräts anzufordern, wobei der erste Token für Zugriff vorzugsweise vom fernen Authentifizierungs-Dienstanbieter, zumindest teilweise auf Authentifizierung des Benutzers beruhend, empfangen.

10. Computerimplementiertes Verfahren nach einem der Ansprüche 7 bis 9, das ferner den Empfang, durch das Rechnersystem, des zweiten Tokens für Zugriff vom fernen Authentifizierungs-Dienstanbieter umfasst, oder wobei der zweite Token für Zugriff der zweiten lokalen Anwendung, zumindest als Antwort auf eine Anforderung von der zweiten lokalen Anwendung, bereitgestellt wird, um auf die zweite ferne Anwendung zuzugreifen.

11. Programm, das bewirkt, dass ein Computer das Verfahren nach einem der Ansprüche 7 bis 10 durchführt.

12. System, umfassend:
Einen computerlesbaren Speicher nach einem der Ansprüche 1 bis 6; und
einen oder mehrere Prozessoren, die konfiguriert sind, auf den Speicher zuzugreifen und zu bewirken, dass das System die Befehle darin ausführt.

## Revendications

1. Mémoire lisible par ordinateur stockant une pluralité d'instructions exécutables par un ou plusieurs processeurs d'un appareil mobile, cette pluralité d'instructions comprenant :
des instructions qui font que le ou les processeurs reçoivent (802), au moyen d'un agent de sécurité de l'appareil mobile, une demande d'accès à un premier fournisseur de services distant, cette demande étant fournie à l'agent de sécurité par une première application locale de l'appareil mobile ;
des instructions qui font que le ou les processeurs ouvrent une session (804), pour un utilisateur associé à la première application, sur un fournisseur de services d'authentification distant, au moyen de la transmission, par l'agent de sécurité, d'une demande d'ouverture de session ;
des instructions qui font que le ou les processeurs reçoivent, au moyen de l'agent de sécurité, depuis le fournisseur de services d'authentification distant, en réponse à la demande d'ouverture de session, un premier jeton pour accéder au premier fournisseur de services distant et un deuxième jeton pour accéder à un deuxième fournisseur de services distant ;
des instructions qui font que le ou les processeurs fournissent (806) à la première application locale, au moyen de l'agent de sécurité de l'appareil mobile, le premier jeton pour accéder au premier fournisseur de services distant ; et
des instructions qui font que le ou les processeurs fournissent (808), à une deuxième application locale associée à l'utilisateur, au moyen de l'agent de sécurité de l'appareil mobile, le deuxième jeton pour accéder au deuxième fournisseur de services distant ; la première et la deuxième application locale faisant partie d'un groupe à signature unique, et le deuxième jeton fourni à la deuxième application locale étant un deuxième jeton pour permettre à la deuxième application locale d'ouvrir une session sur un deuxième fournisseur de services distant associé à la deuxième application locale au nom de l'utilisateur sans que l'utilisateur fournisse des données d'ouverture de session pour ouvrir une session sur le deuxième fournisseur de services distant associé à la deuxième application locale.

2. Mémoire lisible par ordinateur selon la revendication 1, dans laquelle l'application d'agent de sécurité d'un appareil mobile est configurée de façon à fournir une signature unique pour la deuxième application, et dans laquelle la deuxième application consiste de préférence en une application de navigateur de l'appareil mobile associée à un fournisseur de services applicatifs sur le Web, en une application native de l'appareil mobile associée à un fournisseur de services applicatifs, ou en une application hybride de l'appareil mobile configurée comme une application native avec un navigateur incorporé associé à un fournisseur de services applicatifs hybrides.

3. Mémoire lisible par ordinateur selon la revendication 1, dans laquelle la première application consiste en une application de navigateur d'un appareil mobile associée à un fournisseur de services applicatifs sur le Web, et la deuxième application consiste en une application native de l'appareil mobile associée à un fournisseur de services applicatifs.

4. Mémoire lisible par ordinateur selon la revendication 1, dans laquelle la première application consiste en une application native d'un appareil mobile associée à un fournisseur de services applicatifs.

5. Mémoire lisible par ordinateur selon la revendication 4, dans laquelle la deuxième application consiste en une application de navigateur de l'appareil mobile associée à un fournisseur de services applicatifs sur le Web, ou dans laquelle la deuxième application consiste en une deuxième application native de l'appareil mobile associée à un deuxième fournisseur de services applicatifs.

6. Mémoire lisible par ordinateur selon l'une quelconque des revendications 1 à 5, dans laquelle l'ouverture de session comprend l'authentification de l'utilisateur avec un service d'authentification utilisant un appel de procédé de transfert d'état représentationnel, REST.

7. Procédé mis en oeuvre par ordinateur configuré de façon à être exécuté par un ou plusieurs processeurs informatiques d'un appareil mobile, ce procédé comprenant :
la réception (902), par le processeur, d'une demande d'accès à une première application distante, cette demande étant reçue au niveau d'une application d'agent de sécurité de l'appareil mobile depuis une première application locale d'un appareil mobile ;
la fourniture (904), par l'application d'agent de sécurité, d'une demande d'authentification à un ordinateur fournisseur de services d'authentification distant ;
la réception (906), par l'application d'agent de sécurité, depuis le fournisseur de services d'authentification distant en réponse à la demande d'ouverture de session, d'un premier jeton d'accès pour accéder à la première application distante, d'un deuxième jeton pour accéder à une deuxième application distante ;
la fourniture (908), par l'application d'agent de sécurité, du premier jeton d'accès à la première application locale ; et
la fourniture (910), par l'application d'agent de sécurité, du deuxième accès à une deuxième application locale de l'appareil mobile ; la première et la deuxième application locale faisant partie d'un groupe à signature unique, et le deuxième jeton fourni à la deuxième application locale étant un deuxième jeton pour permettre à la deuxième application locale d'ouvrir une session sur la deuxième application distante associée à la deuxième application locale au nom de l'utilisateur sans que l'utilisateur fournisse des données d'ouverture de session pour ouvrir une session sur la deuxième application distante associée à la deuxième application locale.

8. Procédé mis en oeuvre par ordinateur selon la revendication 7, dans lequel la demande d'authentification est fournie au fournisseur de services d'authentification distant comme un appel de procédé de transfert d'état représentationnel, REST.

9. Procédé mis en oeuvre par ordinateur selon la revendication 7 ou 8, dans lequel la demande d'authentification est fournie pour demander l'authentification d'un utilisateur de l'appareil mobile, le premier jeton d'accès étant reçu de préférence depuis le fournisseur de services d'authentification distant, en se basant au moins en partie sur l'authentification de l'utilisateur.

10. Procédé mis en oeuvre par ordinateur selon l'une quelconque des revendications 7 à 9, comprenant en outre la réception, par le système informatique, du deuxième jeton d'accès depuis le fournisseur de services d'authentification distant, ou dans lequel le deuxième jeton d'accès est fourni à la deuxième application locale au moins en réponse à une demande venant de la deuxième application locale pour accéder à la deuxième application distante.

11. Programme qui fait exécuter à un ordinateur le procédé selon l'une quelconque des revendications 7 à 10.

12. Système comprenant :
une mémoire lisible par ordinateur selon l'une quelconque des revendications 1 à 6 ; et
un ou plusieurs processeurs configurés de façon à accéder à cette mémoire et à faire exécuter au système les instructions dans celle-ci.
